(19) Europäisches Patentamt
European Patent Office
Office européen des brevets

(11) EP 1 443 458 A2

(12) EUROPEAN PATENT APPLICATION

(43) Date of publication:
04.08.2004 Bulletin 2004/32

(51) Int Cl.[7]: G06T 5/00

(21) Application number: 04001154.6

(22) Date of filing: 21.01.2004

(84) Designated Contracting States:
AT BE BG CH CY CZ DE DK EE ES FI FR GB GR HU IE IT LI LU MC NL PT RO SE SI SK TR
Designated Extension States:
AL LT LV MK

(30) Priority: 28.01.2003 JP 2003018566

(71) Applicant: KONICA MINOLTA HOLDINGS, INC.
Tokyo 100-0005 (JP)

(72) Inventors:
- Nomura, Shoichi c/o Konica Minolta Photo
Hachioji-shi Tokyo, 192-8505 (JP)
- Ito, Tsukasa c/o Konica Minolta Photo
Hino-shi Tokyo, 191-8511 (JP)
- Hattori, Tsuyoshi c/o Konica Minolta Photo
Hachioji-shi Tokyo, 192-8505 (JP)
- Nakajima, Takeshi c/o Konica Minolta Photo
Hino-shi Tokyo, 191-8511 (JP)
- Ikeda, Chizuko c/o Konica Minolta Photo
Hino-shi Tokyo, 191-8511 (JP)

(74) Representative:
Gille Hrabal Struck Neidlein Prop Roos
Patentanwälte
Bruckneralstrasse 20
40593 Düsseldorf (DE)

(54) **Image processing method, apparatus and computer program**

(57) An image processing method, comprising steps of: obtaining input image information including input image data from an input device; discriminating plural subjects existing in the input image data; dividing the input image data into plural subject patterns corresponding to the discriminated plural subjects; obtaining a relationship among the plural subject patterns; determining a processing method for the input image data of the plural subject patterns on a basis of the relationship, and processing the input image data of the plural subject patterns in accordance with the processing method so as to obtain output image data.

FIG. 13

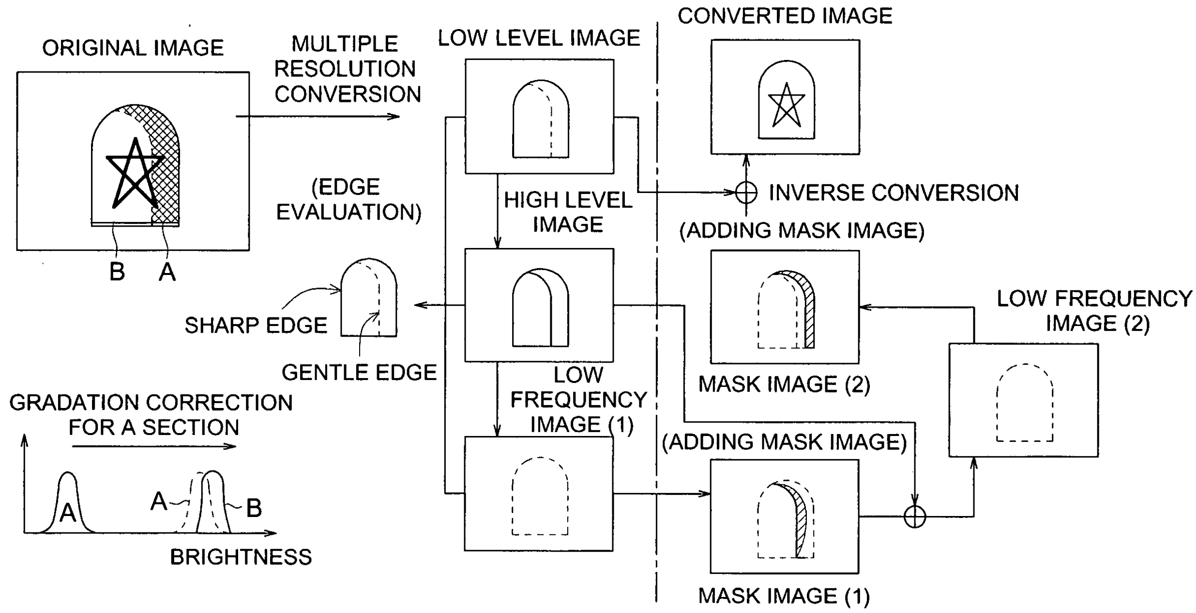




Printed by Jouve, 75001 PARIS (FR)

## Description

### BACKGROUND OF THE INVENTION

The present invention relates to an image processing method to conduct image processing based on inputted image information obtained from an image inputting means for obtaining outputted image information, an apparatus for the aforementioned image processing method and a program for controlling operations of the image processing method.

There has been used a system wherein a digital camera or a conventional camera employing a silver halide film is used for photographing, and images thus obtained are displayed on a hard copy or on a display device such as CRT, for image reproduction.

In these image reproduction systems, it is common that original images are adjusted in terms of brightness, contrast and others for reproduction so that images taken may be reproduced nicely.

For example, in the case of a conventional silver halide negative-positive printing process, there has long been used a method to change exposure time or an amount of light of a light source for printing, when conducting exposure for photographic printing from a film to a photographic paper.

In the case of printing from a digital still camera, te same processing as in the foregoing is realized by conducting numerical conversion on obtained image signal values by the use of a look-up table (LUT) or the like.

When conducting various adjustments as those mentioned above, preferable adjustment matching with the images taken is conducted, and in many cases, most preferable adjustment for a primary subject in images is conducted. When conducting the adjustment of this kind manually, there have been many cases of difficulties such as requirement of high technologies and experiences and time-consuming labor. Therefore, there has been disclosed an image processing method to operate automatically or semi-automatically. An example of the foregoing shows that a preferable photograph can be obtained by extracting information of a face from image information and by finishing it to be in a preferable gradation (see Patent Document 1).

(Patent Document 1)

TOKKAI No. 2001-84274

However, there are various photographing purposes for photography, and there are many cases wherein how a photograph is evaluated or a result of the most preferable reproduction varies depending upon an appraiser even when a subject is the same, and further, a photograph is the same. There has been demanded an image processing method which meets these various requirements and offers simply preferable reproduced images.

Further, in photographs taken usually, there are estimated various types of primary subjects. Among them, there are some items in a specific form which is important for the photographs but is not recognized generally, such as a building that is unique in the destination and a unique uniform in group activity represented by a group tour, in photographs of the tour to a distant place. For example, in the case of a souvenir picture taken in the tour, some customers prefer the processing adjustment that attaches importance to the buildings on the background at some sacrifice of persons, although processing adjustment for image reproduction attaching importance to persons is usually performed. Conventional technologies have been unable to comply sufficiently with the aforementioned requirements.

### SUMMARY OF THE INVENTION

The invention has been achieved in view of the circumstances stated above, it is object is to provide an image processing method capable of conducting preferable adjustment for the purpose of photographing and for the estimated primary subject, an image processing apparatus capable of performing the aforementioned image processing and an image processing program that regulates operations of the apparatus.

The object of the invention stated above can be attained by the following items.

Item 1)

An image processing method that conducts image processing based on inputted image information obtained from an image inputting means and thereby obtains outputted image information wherein an image is classified into plural sections by discriminating subjects in the image, and a process to make each classified image to be a subject pattern which can be image-processed by the method determined based on relationship with other images is carried out, an image processing apparatus wherein there is provided an image processing means that obtains outputted image information based on inputted image information obtained from an image inputting means, and the image processing means has a means to classify an image into plural sections by discriminating subjects in the image, and to make each classified image to be a subject pattern which can be image-processed by the method determined based on relationship with other images, and a program to make the image processing means to obtain outputted image information based on inputted image information obtained from the image inputting means to function as a means [to classify an image into plural sections by discriminating a subject in the image and to make each classified image to be a subject pattern which can be image-processed by the method determined based on relationship with other images.

Due to this, it is possible to conduct preferable adjustment which complies with the purpose of photographing and with a primary subject estimated.

Item 2)

The image processing method according to Item 1) that determines an image processing method for each pattern of the subject from information relating to each pattern of the subject, the image processing apparatus according to Item 1) wherein the image processing means determines an image processing method for each pattern of the subject from information relating to each pattern of the subject and the program according to Item 1) to determine an image processing method for each pattern of the subject from information relating to each pattern of the subject.

Due to this, in the photograph in which a plurality of subjects are intermingled, it is possible to obtain a finished photograph wherein each subject is taken into consideration.

Item 3)

The image processing method and the image processing apparatus according to Item 2) wherein information about a pattern of the subject includes information of priority order established for each pattern of the subject and the program according to Item 2) that makes the information of priority order established for each pattern of the subject to be included in information relating to the pattern of the subject.

Due to this, in the photograph in which a plurality of subjects are intermingled, it is possible to obtain a finished photograph wherein an order of importance of each subject is taken into consideration.

Item 4)

The image processing method and the image processing apparatus according to Item 3) wherein the information of priority order is expressed by a value of weighting corresponding to importance of the pattern of the subject, and the program according to Item 3) wherein the information of priority order is made to be a value of weighting corresponding to importance of the pattern of the subject.

Due to this, the order of importance of each subject can be expressed simply by the numerical value, which makes it easy to consider finely.

Item 5)

The image processing method according to Item 3) or Item 4) wherein a pattern extracting processing for detecting and extracting plural subject patterns from image information is conducted, and an image processing method is determined from information relating to each extracted subject pattern, the image processing apparatus described in Item 3) or Item 4) wherein the image processing means conducts a pattern extracting processing for detecting and extracting plural subject patterns from image information and determines an image processing method from information relating to each extracted subject pattern, and the program according to Item 3) or Item 4) wherein the image processing means is made to conduct the pattern extracting processing for detecting and extracting plural subject patters from image information, and an image processing method is determined from information relating to each extracted subject pattern.

Due to this, even in the photograph in which a plurality of subjects are intermingled, it is possible to obtain a finished photograph wherein each importance is taken into consideration, and to obtain simply a high-definition photograph.

Item 6)

The image processing method and the image processing apparatus according to either one of Items 3) - 5) wherein the information of priority order is corrected based on information of alternate priority order corresponding to how each subject pattern exists in an image area and the program according to either one of Items 3) - 5) wherein the information of priority order is corrected based on information of alternate priority order corresponding to how each subject pattern exists in an image area.

Due to this, natural correction results can be obtained because a meaning of existence of a subject in an image area can be evaluated.

Item 7)

The image processing method and the image processing apparatus according to Item 6) wherein the information of priority order is information corresponding to at least one of the rate of a subject pattern to an image area and the position of a subject pattern in an image area, and the program according to Item 6) wherein the information of priority order corresponds to at least one of the rate of a subject pattern to an image area and the position of a subject pattern in an image area.

Due to this, natural correction results can be obtained more simply because a meaning of existence of a subject in an image area can be evaluated effectively and surely.

Item 8)

The image processing method according to either one of Items 1) - 7) wherein, when scene attribute information that accompanies inputted image information or is instruction-inputted is existent, division of the subject pattern is determined in accordance with the scene attribute, the image processing apparatus according to either one of Items 1) - 7) wherein an inputting means is provided, and when scene attribute information that accompanies inputted image information or is instruction-inputted is existent, the image processing means determines division of the subject pattern in accordance with the scene attribute, and the program according to either one of Items 1) - 7) wherein the inputting means is made to function as a means to instruction-input scene attribute information, and when scene attribute information that accompanies inputted image information or is instruction-inputted is existent, division of the subject pattern is determined in accordance with the scene attribute.

Due to this, more efficient extraction of pattern and more preferable correction results are obtained, because preferable pattern can be selected in accordance with scene attribute.

Item 9)

The image processing method according to either one of Items 3) - 8) wherein, when scene attribute information that accompanies inputted image information or is instruction-inputted is existent, the information of priority order is determined in accordance with the scene attribute, the image processing apparatus according to either one of Items 3) - 7) wherein an inputting means is provided, and when scene attribute information that accompanies inputted image information or is instruction-inputted is existent, the image processing means determines the information of priority order in accordance with the scene attribute, the image processing apparatus according to Item 8) wherein, when scene attribute information that accompanies inputted image information or is instruction-inputted is existent, the image processing means determines the information of priority order in accordance with the scene attribute, the program according to either one of Items 3) - 7) wherein the inputting means is made to function as a means to instruction-input scene attribute information, and when scene attribute information that accompanies inputted image information or is instruction-inputted is existent, the information of priority order is determined in accordance with the scene attribute, and the program according to Item 8) wherein when scene attribute information that accompanies inputted image information or is instruction-inputted is existent, the information of priority order is determined in accordance with the scene attribute.

Due to this, image processing results which are more preferable subjectively can be obtained, because the scene attribute can be specified at an appropriate occasion.

Item 10)

The image processing method and the program according to either one of Items 1) - 9) wherein a unit pattern is extracted from inputted image information under the assumption that the subject pattern is composed of plural unit patters, and how the unit patterns are connected is used for detection of how the subject pattern is existent, and the image processing apparatus according to either one of Items 1) - 9) wherein the image processing means extracts a unit pattern from inputted image information under the assumption that the subject pattern is composed of plural unit patters, and uses how the unit patterns are connected for detection of how the subject pattern is existent.

Due to this, even in the case of a pattern that is difficult to specify an entire form such as a person wearing a uniform, specific shrines and temples or specific trees, it is possible to extract from its unit factor.

Item 11)

The image processing method according to Item 10) wherein the extraction of the unit pattern is conducted when specification of a position for existence of a unit pattern is received on the image displayed by an image display means from inputted image information, and relationship of connection of all the extracted unit patterns is obtained to make information of the relationship of connection to be subject pattern information, and thereby, the subject pattern is extracted from inputted image information based on the subject pattern information, the image processing apparatus according to Item 10) wherein an image display means is provided, and the image processing means conducts the extraction of the unit pattern when specification of a position for existence of a unit pattern is received on the image displayed by an image display means from inputted image information, and relationship of connection of all the extracted unit patterns is obtained to make information of the relationship of connection to be subject pattern information, and thereby, the subject pattern is extracted from inputted image information based on the subject pattern information, and the program according to Item 10) wherein the image display means is made to function as a means to display images by inputted image information, and the extraction of the unit pattern is conducted when specification of a position for existence of a unit pattern is received on the image displayed by an image display means from inputted image information, and relationship of connection of all the extracted unit patterns is obtained to make information of the relationship of connection to be subject pattern information, and thereby, the subject pattern is extracted from inputted image information based on the subject pattern information.

Due to this, even in the case of a pattern that is not recognized in general, it can be registered as a subject pattern newly, and operations for extracting a subject pattern can be conducted with simple procedures.

Item 12)

The image processing method and the program according to Item 11) wherein an optional image is selected from a series of plural images obtained from an image inputting means to obtain subject pattern information composed of the information of the relationship of connection,

and the subject pattern information is applied to the aforementioned series of plural images for conducting image processing, and the image processing apparatus according to Item 11) wherein the image processing means selects an optional image from a series of plural images obtained from an image inputting means to obtain subject pattern information composed of the information of the relationship of connection, and the subject pattern information is applied to the aforementioned series of plural images, for conducting image processing.

Due to this, even in the case of setting a new subject pattern, it is possible to advance operations efficiently, because it has only to be obtained from a representative frame.

Item 13)

The image processing method according to either one of Items 10) - 12) wherein a subject pattern corresponding to customer information is extracted, the image processing apparatus according to either one of Items 10) - 12) wherein storage means to store customer information is provided and the image processing means extracts a subject pattern corresponding to customer information obtained through inputting or by referring to the storage means, and the program according to either one of Items 10) - 12) wherein the storage means is made to function as a means to store customer information and a subject pattern corresponding to customer information obtained through inputting or by referring to the storage means is extracted.

Due to this, it is possible to extract surely from a unit factor, even in the case of a strong individual factor such as a subject that is important for a specific individual or a customer and is specific, or a pattern in which names are easily overlapped such as persons wearing uniforms.

Namely, the inventor of the invention has achieved the invention under a conception that image processing wherein a specific subject and relationship between the subject and another subject are watched can be carried out if a subject existing in an image is distinguished and divided into plural portions by using a method of multiple resolution conversion.

## BRIEF DESCRIPTION OF THE DRAWINGS

Fig. 1 is a block diagram showing the basic structure of functions of a digital mini-lab.
Fig. 2 is a diagram showing an example of signal changes in inputted signals.
Fig. 3 is a diagram showing a method of the dyadic wavelet conversion of one level in two-dimensional signals.

Fig. 4 is a diagram showing dyadic wavelet inverse conversion.

Fig. 5 is an image diagram of a head of a person.

Fig. 6 is an image diagram for detection of an image corresponding to a resolution level.

Fig. 7 is an image diagram corresponding to establishment of a level used for detection of a size of a pattern to be extracted and of edge information.

Figs. 8(a) and 8(b) each is an image diagram of a subject pattern composed of a unit pattern.

Figs. 9(a) and 9(b) each is an image diagram of an example wherein a unit pattern is defined under the state of connection.

Fig. 10 is a diagram for illustrating processing in an example of a school trip to Kyoto.

Figs. 11(a) and 11(b) each is a diagram showing an example of a histogram of brightness of an original image.

Figs. 12(a), 12(b) and 12(c) each is a diagram showing an example of a histogram in the case of reproducing by conducting gradation correction.

Fig. 13 is a block diagram showing schematically an embodiment of an image processing method of the invention.

Fig. 14 is a diagram showing an example of a mask form.

Fig. 15 is a diagram showing another example of a mask form.

Fig. 16 is a diagram showing still another example of a mask form.

Figs. 17(a) and 17(b) is a diagram showing an example of area division concerning sharpness and graininess.

Fig. 18 is a flow chart showing an example of a process for executing the invention.

Fig. 19 is a flow chart showing an example wherein the invention is applied on gradation correction, and further, local printing processing is used in parallel.

Fig. 20 is a flow chart showing an example of another process for determining scene attribute.

Fig. 21 is a flow chart showing an example for indicating an actual process in the case of registering a new subject pattern.

## DETAILED DESCRIPTION OF THE PREFERRED EMBODIMENT

As an embodiment of the invention, there will be explained as follows an example wherein the image processing method of the invention is applied to a digital minilab representing an image processing apparatus that conducts a service of writing images in recording media such as a print or CDR to accept an order from a customer in a photo shop which has spread in recent years.

Fig. 1 is a block diagram showing the basic structure of functions of the digital minilab.

Images taken by digital camera (hereinafter referred to as DSC) 1 are stored in various image recording media 2 such as SmartMedia or CompactFlash (R) and are brought in stores. (Silver halide) film 3 used for photographing by a conventional camera is subjected to photographing processing in advance to become image document 4 in a form of a negative film or a positive film.

Images from DSC 1 are read by media driver 5 corresponding to image recording medium 2 in an image inputting section as image signals, and are converted equally into image signals by film scanner 6, in the case of developed film 4.

Types of images to be inputted in image inputting section 10 are not limited to those from DSC1, as in the occasions where image inputting is carried out by a reflection scanner such as a flat bed scanner, in the case of a reflection-type document, or, image information is inputted through LAN or Internet circuits, but they are not illustrated here. These images can naturally be subjected to image processing described later.

Information of inputted image thus acquired in image inputting section 10 are transmitted to image processing section 20 wherein various types of processing including the image processing of the invention are carried out, and outputted image information which has been subjected to various types of processing is subjected to color conversion processing that is matched to various types of outputting apparatuses (illustrating image recording media 9 such as silver halide exposure printer 7, ink jet printer 8 and CDR, in this case), and then, is outputted. Incidentally, in the drawing, the color conversion processing is handled as a part of contents of processing in the image processing section, and it is not illustrated.

Now, a function to input scene attribute and to register it is connected to image processing section 20.
This function is composed of instruction inputting section 30 that is made of key board 31, mouse 32 and contact sensor 34 capable of instructing position information by touching an image area directly while observing the image displayed by image display section 33, and of information storage section 40 that stores these instruction, inputting and registration information, and it is possible to input scene attribute or to instruct selection of scene attribute.

The scene attribute in this case means those representing primary purposes of photographs, and examples thereof include, for example, travel photography, outdoors, events photography, nature photography and portraits.

Further, it is preferable that film scanner 6 and media driver 5 have functions to read the aforementioned information from films and media used for photographing in cameras having functions to store scene attribute and related information.

As information to be read by film scanner 6, there are given, for example, various pieces of information recorded on a magnetic layer coated on a film in APS (advanced photosystem) of a film-based camera. As an example, there are given PQI information established for print quality improvement, message information that is established in the course of photographing and is displayed on a print and other information.

With respect to information to be read by media driver 5, there are some cases where various pieces of information defined by types of image recording formats such as Exif, for example, information described in an example of the silver halide film and further various pieces of information are recorded, and these pieces of information are read and utilized effectively.

When there is present information obtained from the media mentioned above, if scene attribute is obtained or analogized from these media, the time required for confirming scene attribute can be saved in each order placing, which is preferable.

Further, if customer information is controlled, and scene attribute is established separately, or the customer information is used as scene attribute itself in a photo shop, for example, customer's taste established once can be taken out simply in the course of establishing priority order that will be described later, which is preferable from viewpoints of improvements of work efficiency and customer satisfaction.

These pieces of information and further information described later are accumulated in information storage section 40 to be utilized according to circumstances.

Next, contents of processing conducted in the aforementioned image inputting section, image processing section, information storage section and instruction inputting section will be explained.

After a scene attribute is determined by the various methods stated above, a subject pattern to be extracted is determined corresponding to the determined scene attribute. The subject pattern mentioned here means a recognizable separate and specific subject existing in an image such as a person, a person wearing specific clothing (a uniform or a sports uniform) and a building (Japanese style, Western, modern, historical or religious building) and further, such as clouds, a blue sky or the sea, and information concerning the subject pattern includes information of a priority order of the subject pattern described later (declared by a value expressed by a coefficient of rank determination or by a coefficient of weighting), and further includes preferable gradation of the subject, information about reproduction of color tone and information of a position and a size of a subject pattern, average gradation, a gradation range and of a color tone.

Incidentally, there are some cases where the state of classification of the subject pattern is varied depending upon the state of ordering from customers. In an example of a person, for instance, in the case of "a person" simply, it is possible to handle as information concerning one pattern independently of the number of persons. However, if classification for "a student", "a general person" or classification for "a man" and "a woman" does make sense for an orderer, the person takes two types of subject patterns.

Even in the case of a customer himself or herself and others such as "a bride", "a bridegroom" and "other attendants", or "a person A" and "a person B" in a wedding reception, each of them is a recognizable individual for a orderer, which can result in a separate subject pattern.

As a method to extract a subject pattern, it is possible to establish an extracting method newly although various methods for extracting a pattern which are known generally can be used. AS a preferable example, there will be explained a method that was found newly by the inventors of the invention and can extract a pattern at a high degree of certainty by utilizing multiple resolution conversion processing by Dyadic Wavelet.

The multiple resolution conversion mentioned here is a method to capture how signal intensity of specific frequency area is dispersed in image information, by dividing a frequency zone into several zones, and Dyadic Wavelet is a preferable method when it is utilized in the invention, because an image size does not become smaller in the course of conducting resolution conversion as described later, and accuracy of detecting image positions has the property to be kept to be high even if a conversion level is raised (even if processing is repeated).

The Dyadic Wavelet processing will be described as follows.

With respect to Dyadic Wavelet (dyadic wavelet) to be used in the invention, details thereof are explained in "Singularity detection and processing with wavelets" by S. Mallat and W. L. Hwang, IEEE Trans. Inform. Theory 38 617 (1992), "Chracterization of signals from multiscale edges" by S. Mallet and S. Zhong, IEEE Trans. Pattern Anal. Machine Intel. 14 710 (1992) and "A wavelet tour of signal processing 2ed." by S. Mallet, Academic Press, and an outline thereof will be explained below.

A wavelet function of the dyadic wavelet is defined as follows.

Numeral 1

$$\psi_{i,j}(x) = 2^{-i}\psi\left(\frac{x-j}{2^{i}}\right)$$

In Numeral 1, the symbol i represents natural number (1).

In short, a unit of the minimum movement of a position of the dyadic wavelet is constant independently of level i. Due to this, the following characteristics are generated in the dyadic wavelet conversion.

Characteristic 1:

An amount of signals respectively of high frequency zone component $W_i$ and of low frequency zone component $S_i$ each being generated in the dyadic wavelet conversion at the level shown below is the same as signals $S_{i-1}$ before conversion.

Numeral 2

$$S_{i-1} = \sum_{j}\langle S_{i-1},\psi_{i,j}\rangle \cdot \psi_{i,j}(x) + \sum_{j}\langle S_{i-1},\phi_{i,j}\rangle \cdot \phi_{i,j}(x) \equiv \sum_{j} W_i(j)\psi_{i,j}(x) + \sum_{j} S_i(j) \cdot \phi_{i,j}(x) \quad (2)$$

Characteristic 2:

The following relational expression holds between scaling function $\phi_{i,j}(x)$ and wavelet function $\varphi_{i,j}(x)$.

Numeral 3

$$\psi_{i,j}(x) = \frac{\partial}{\partial x}\phi_{i,j}(x) \quad (3)$$

Therefore, high frequency zone component $W_i$ generated in the dyadic wavelet conversion indicates primary differential (inclination) of low frequency zone component $S_i$.

Characteristic 3:

With respect to $W_i \cdot \gamma_i$ (hereinafter referred to as corrected high frequency zone component) representing a high frequency zone component multiplied by coefficient $\gamma_i$ (see the reference document relating to the dyadic wavelet conversion mentioned earlier) determined in accordance with level i of wavelet conversion, the relationship between levels of signal intensity of the corrected high frequency zone component $W_i \cdot \gamma_i$ after the conversion follows a fixed law, in accordance with singularity of a signal change for inputted signals. Namely, when corrected high frequency zone component $W_i \cdot \gamma_i$ corresponding to gentle (differentiable) signal changes shown with 1 and 4 in Fig. 2 increases in terms of signal intensity as the level number i increases, corrected high frequency zone component $W_i \cdot \gamma_i$ corresponding to step-like signal changes shown with 2 in Fig. 2 remains the same in terms of signal intensity independently of the level number i, while, corrected high frequency zone component $W_i \cdot \gamma_i$ corresponding to signal changes in the form of $\delta$ function shown with 3 in Fig. 2 decreases in terms of signal intensity as the level number i increases.

Incidentally, the level number i mentioned here is a resolution level, and it indicates the number of steps for processing.

Characteristic 4:

The method of the dyadic wavelet conversion for one level in two-dimensional signals like image signals is performed as shown in Fig. 3. Owing to the wavelet conversion for one level, low frequency zone component $S_{n-1}$ is divided into two high frequency zone components $Wx_n$ and $Wy_n$ and one low frequency zone component $S_n$. The two

high frequency zone components correspond to x component and y component of variable vector $V_n$ in two dimension of low frequency zone component $S_n$. Size $M_n$ and angle of deviation $A_n$ of the variable vector $V_n$ are given by the following expressions.

Numeral 4

$$M_n = \sqrt{Wx_n^2 + Wy_n^2} \qquad (4)$$

$$A_n = \mathrm{arg}ument\ (Wx_n + iWy_n) \qquad (5)$$

Further, it is known that $S_{n-1}$ before conversion can be constituted again by conducting dyadic wavelet inverse conversion shown in Fig. 4 on two high frequency zone components $Wx_n$ and $Wy_n$ and one low frequency zone component $S_n$ which were obtained by the dyadic wavelet conversion. In the drawing, LPF represents a lowpass filter for conversion, HPF represents a highpass filter for conversion, and LPF' represents a lowpass filter for inverse conversion, while HPF' represents a highpass filter for inverse conversion. Coefficients of these filters are determined appropriately in accordance with wavelet functions (see the reference document stated above). Further, each of LPFx, HPFx, LPF'x and HPF'x shows processing in the x-direction, and each of of LPFy, HPFy, LPF'y and HPF'y shows processing in the y-direction.
In the dyadic wavelet, a filter coefficient is different for each level, and with respect to the filter coefficient for level n, the one wherein zeros in quantity of $2^{n-1} - 1$ are inserted between coefficients of a filter with level 1 is used (see the reference document stated above).
Now, by using faces in Fig. 5, there will be explained an example wherein multiple resolution conversion is conducted on an image by the use of Dyadic Wavelet explained above.
First, a resolution level used to extract patterns is established in accordance with the pattern to be extracted.
Most of those recognized generally as the pattern, especially the subject pattern mentioned here have not only a contour but also various peculiar partial factors. For example, in the case of the head of a person, there are eyes (further, the pupil, an iris, the eyelashes and a blood vessel on the white of an eye), a nose, a mouth, undulation of a cheek, a dimple and an eyebrow, in addition to a contour of the head. Among those mentioned above, the partial factors which are effective for distinguishing the pattern to be extracted are made to be "a constituent", and a resolution level used for the pattern extraction is established for each constituent.
For example, as shown by image diagrams in Figs. 5 and 6, the contour itself of the head of a person is an edge that is extracted on a divided image at low level, and is recognized clearly and accurately. On the other hand, with respect to gentle patterns of the constituent of a face existing in the contour of the head, such as the bridge line of the nose, a shape of the lips, lines appearing around lips of a smiling face, "dimples" and a swelling of a cheek, for example, their characteristics can be captured precisely by using edge information appearing on a divided image at higher level.
Now, a preferable example for each of a method of determining the constituent of a subject pattern and a method of determining preferable resolution for distinguishing each constituent will be explained as follows.
First, the constituent of the subject pattern is established. For example, in the case of "a face of a person" in general, the constituents to be established are represented by the various constituents stored in advance as those described below.

a: Contour of a face
b. Pupil
c. Eyebrow
d. Mouth
e. Hair
f. Nose bridge
g. Nostril
h. Convex on a cheek

When a specific person is registered as a subject pattern, the following constituents may be established newly in addition to the aforesaid subject pattern, which makes it possible to specify an individual preferably.

i: Blotch, mole

j. Dimple
k. Mustache

In the case of a specific person, it is possible to establish characteristics which are different from those in the occasion of a general "face of a person", concerning the a - k constituents, and there are some cases where several constituents indicate "none".

After each constituent is established for the objective subject pattern, multiple resolution conversion is conducted on the image by the use of dyadic wavelet conversion.

Signal intensity in divided signals at each level of multiple resolution conversion is obtained for each constituent, and the maximum level is obtained.

Incidentally, the signal intensity in this case means the maximum value of the signal showing an edge component detected at each level, and when comparing the signal intensity between plural levels, it is naturally preferable to use the corrected high frequency zone component explained in the aforementioned dyadic wavelet, as a signal value.

Though the level for the maximum stated above may be used as a preferable resolution, it is also possible to make some level changes by evaluating the results of actual image processing.

When the dyadic wavelet conversion is used, there are characteristics that the signal level of the edge is not changed greatly by the resolution level, as shown in the aforementioned Characteristic 3, in the case of the constituent whose contour is very clear like a knife edge pattern. In such a case, the level at which a form of a contour of the constituent can be recognized clearly, or the lowest level for divided resolution is made to be the preferable resolution level.

The constituents in the head stated above include those whose contours are relatively clear and those whose contours are not clear, and for example, contours a, c and I belong to the former, and those f, h and j belong to the latter. Extraction and registration of the constituents belonging to the former can be conducted in the method wherein an image is displayed on a monitor, then, the displayed portion is designated by a mouse or a contact type sensor and an area near the designated portion is cut off automatically or manually. In the case of the latter, it is difficult to distinguish an area where the constituent is present from an area where the constituent is not present clearly and to cut off.

When it is difficult to cut off, an area where the constituent is present can be designated roughly. The preferable resolution established to satisfy the constitution requirements is at a higher level than that of those belonging to the former having a clear contour. Therefore, when extracting the constitute belonging to the latter actually in the case of rough designation of the area, it is possible to extract the objective constituent in the following way.

All of the edges detected on a candidate area where constitutes are extracted are extracted, and these are compared in terms of signal intensity of each resolution level, and edge components whose signal intensity is detected to be strong in divided images having levels lower than preferable resolution level are eliminated from the candidate area because they are considered not to be included in the constituents. The remaining area is inspected by the preferable resolution level and is extracted as an objective constituent.

In the example stated above, images before division are displayed on the monitor and constitutes are designated. However, when constituents are designated by those who have a certain level of knowledge about image processing technologies, if the divided image subjected to resolution conversion actually is displayed on a monitor, preferably, if the divided image subjected to resolution conversion actually is displayed in an arrangement wherein the divided image can be compared with the image before division, so that the constituent to be extracted by the displayed resolution level may be designated, new characteristic points which cannot be recognized by inputted images alone can be simply discovered, and accuracy for distinguishing subject patters can be improved.

In Fig. 5, when A represents a pupil and an edge of an upper eyelid, B represents a nose bridge and lines around lips and C represents swellings on cheeks, characteristics of a face can be recognized more precisely by detecting B rather than A, and detecting C rather than B, with an image having resolution level at higher level as stated above, as shown in Fig. 6.

Further, if a level to be used for detection of the edge information stated above is established in accordance with a size of the pattern to be extracted, as shown in Fig. 7, pattern detection by the use of up to detailed information can be conducted for a large pattern, while, the maximum, effective and high speed detection processing can be conducted for a small pattern by using information obtained at that size, which is an excellent characteristic.

A size of the aforesaid pattern may either be obtained by conducting tentative pattern detection separately and thereby from the size of the pattern, or be obtained tentatively from scene attributes (souvenir pictures, portraits and others) and image sizes. With respect to a size of the pattern in this case, a size of the pattern, for example, can be expressed by the number of pixels, and in the illustrated example, if a size of a face "medium" is available, characteristic extracting levels which are preferable for A, B and C can be determined.

When original image sizes (pattern size and image resolution) are extremely large, it is possible to reduce an amount of necessary calculation processing greatly by conducting resolution conversion up to the image size corresponding to the size of "medium" stated above and by conducting pattern extracting processing, which is convenient.

Next, there will be explained a method to look up all subject patterns capable of being extracted from images. Subject patterns to be extracted are switched in accordance with the determined scene attribute, as stated above. Some examples are shown below.

Scene attribute → Subject pattern (Left side is higher in priority order)
School trip · Kyoto → Face/person wearing a uniform/historical building (Japanese style building)
Wedding reception → Bride/bridegroom/face/dress/spotlight

There are also subject pattern requirements which are overlapped to exist, as shown by a bride, a bridegroom, a face, a dress and a spotlight in the aforesaid example.
With respect to the aforementioned subject pattern, in this case, it can also be established in the following method, for example, although the one determined in advance may be used.

1) An image is displayed on a monitor, and a primary image portion is designated.
2) A contour area including the designated portion is extracted automatically, and pattern obtained here is made to be a unit pattern. When all of the necessary patterns are not included, the operations mentioned above are repeated to combine microscopic contours.
3) When extraction of all contours is completed, registration and designation are conducted on the information-recorded portion (a registration key is pushed). Registration information is composed of information about selected areas (information of a collection of unit patters, including the number of the unit patterns and how they are coupled, and information of various values of characteristics of all areas), names of areas (students each wearing a uniform) and priority order information.

Further, as the unit pattern mentioned above, it is also possible to designate an object having a slightly complicated structure corresponding to the aforementioned subject pattern such as "a face" and "a uniform", and a combination of these objects makes it possible to register a higher level subject pattern such as "a student" simply.
It is further possible to express the state of coupling shown in Fig. 8, for example, and two categories of "a male student" (Fig. 8 (a)) and "a female student" (Fig. 8 (b)) are included in a category of "students", and each of them is defined (a male student takes patterns of (1) and (2) and (3), and a female student takes (1) and (4) and (5)), and a student can be defined by combination of patterns ({(1) and (2) and (3)} or {(1) and (4) and (5)}) ("and" in this case represents a logical product and "or" represents a logical add).
In this case, with respect to (2), (3), (4) and (5), a definition peculiar to the specific pattern may be needed, but with respect to (4), a - f are designated first on a displayed image and extracted, and characteristics values of a - f and the state of coupling shown in Fig. 9 (b) are defined as (4).
Incidentally, as the general state of photographic printing in a photo shop, there are many cases wherein orders for prints are placed collectively for a plurality of related frames such as prints at time of development from roll films and print data from image storage media used in photographing by digital cameras (hereinafter referred to as a series of orders).
When a series of orders include a plurality of images, it is possible to conduct the aforesaid extraction and registration operations with a single typical image in the plural images, and thereby to conduct pattern extracting operations for all images in a series of image group, based on the information about the aforesaid operations, thus, the number of times of a pattern registration operation can be reduced and efficient operations can be carried out.
Further, when the registered pattern mentioned above is one peculiar to a certain customer, if the registered pattern is stored together with customer information so that necessary registered pattern may be called from customer information in the case of next print ordering, it is more timesaving, and high level service can be realized.
Further, when conducting processing for a series of orders as in the foregoing, it is possible to extract, from all image areas, the subject patterns which can be estimated, and thereby to infer scene attribute and a priority order from statistic results of emerging frequency and existing locations in the image area.
By doing this, it is possible to guess the subject which is considered by a customer to be most important, even when information about scene attribute cannot be obtained from an orderer, which makes it possible to obtain simply a print that is preferable for a customer at a high probability.
A method to give a priority order to the extracted subject will be explained as follows.
Though a priority order is determined based on the information of a priority order determined in accordance with scene attribute, it is also possible to give weighting to priority order information based on a size (a large size is emphasized, for example) of a subject pattern or on a position (an object located at the center is emphasized, for example), and thereby, more preferable information about importance of the subject pattern can be obtained. Hereinafter, information about a degree of priority obtained in the aforesaid way is called "a degree of importance".
By using information including a subject pattern to be extracted, GPS signals as a method of determining information of priority order of the subject pattern, time, maps, geographical features information, retrieval information obtained by using an automatic retrieval engine such as Internet, information of a self-governing body, a sight-seeing association and the Society of Commerce and Industry and the information wherein the aforesaid pieces of information are linked, it is possible to rank a subject pattern that is generally important at a picture-taking spot and a land mark as information having a high priority order.

Then, for enhancing the customer satisfaction, there is conducted image processing wherein the subject pattern having a high degree of importance is more emphasized. As and example, there is given establishment of conditions of gradation conversion wherein the subject pattern having a high degree of importance is finished more preferably in terms of gradation.

In Fig. 10, there will be explained the processing about brightness in an example of a school trip to Kyoto. Let is be assumed in this case that priority order information is established as follows.

(1) Person wearing a uniform: Priority order 1, weighting coefficient 5
(2) Historical building (Japanese style building): Priority order 2, weighting coefficient 2
(3) Face: Priority order 3, weighting coefficient 1

In the case of the figure, all factors are found from the original image, and (3) is included in (1) (extraction factor is (1)), and both of them are slightly small, while, (2) exists to be large at the center portion.

Now, if the weighting corresponding to a size is established as follows as information of sub-priority order,

a: Subject "large" weighting coefficient 1.0
b: Subject "medium" weighting coefficient 0.8
c: Subject "slightly small" weighting coefficient 0.3
d: Subject "small" weighting coefficient 0.1

the weighting for (1) and (2) are as follows,

$$(1): 5 \times 0.3 = 1.5$$

$$(2): 2 \times 1.0 = 2.0$$

which means that the people photograph in which the building (object of the trip) is emphasized is obtained by the aforementioned processing, although this image is considered to be a souvenir picture taken in front of the historical building.

Under the assumption that the aforesaid example shown in Fig. 11 (a) has a histogram with brightness shown in Fig. 11 (b), $\alpha$ represents an amount of gradation correction that finishes (1) to be most preferable and $\beta$ represents an amount of gradation correction that finishes (2) to be most preferable, amount of gradation correction $\gamma$ wherein weighting is taken into consideration is obtained by

$$\gamma = (1.5 \times \alpha + 2.0 \times \beta) / (1.5 + 2.0)$$

for example, and is reproduced by the histogram shown in Fig. 12 (a).

Incidentally, the values 1.5 and 2.0 in the calculation expression above (the same is applied also to the calculation expression described later) are the values of weighting obtained as an example in the calculation of weighting in (1) and (2) stated earlier, and are those handled as a variable number in general image processing.

As another example, there is given utilization of a method of local printing wherein total gradation conversion is conducted so that the subject pattern having a high degree of importance may be finished to be most preferable in terms of gradation, and for other subject patterns, gradation on its area alone is changed selectively. By adding the local printing processing, brightness of each of subject factors (1) - (3) can be corrected to be in an appropriate state.

In the explanation using the expressions, an amount of correction for the total gradation is made to be $\beta$ that conducts processing of (2) in a most preferable way, and for (1), gradation processing corresponding to ($\alpha$ - $\beta$) has only to be conducted on its area alone (Fig. 12 (b)).

On the other hand, since both of (1) and (2) exist in a single sheet of image, if they are corrected separately and independently, nature of the image might be lost. When an amount of gradation correction of ($\alpha$ - $\beta$) in the expression stated above is too large, there is a fear that the balance as a sheet of photograph is lost.

Under the assumption that the upper limit of an amount of correction that can conduct natural gradation correction is represented by $\delta$ (and $\delta < (\alpha - \beta)$, $\delta > 0$), if the gradation correction is conducted in a way wherein $\varepsilon = (\alpha - \beta) - \delta$ holds, an amount of gradation correction for (2) is $\beta + \varepsilon \times 1.5/(1.5 + 2.0)$ and an amount of gradation correction for (1) is $\varepsilon \times 1.5/(1.5 + 2.0) + \delta$ (local printing processing), for example, results of totally natural correction can be obtained (Fig. 2 (c)).

As explained above, it is possible to employ a method wherein a priority order (weighting information) is determined, an object having great weighting is made to be in appropriate brightness, and other constituent factors are made to be uniform in terms of natural brightness balance.

With respect to limit $\delta$ wherein local printing processing can be conducted naturally, its value varies depending on how to conduct local printing processing, and in particular, depending on which processing is conducted, at an area near a boundary of patterns. An example of a method to conduct preferably the processing related to the invention will be explained as follows.

Fig. 13 is a block diagram showing schematically an embodiment of image processing method of the invention. The original image indicates that an object in a room whose hanging-bell-shaped window is opened is photographed. The object in the room is made to be in a star shape for simplification.

The scene shows that sunbeams come in from the outside obliquely from the right side, and an image within a window frame including the star-shaped subject is unsightly as a photograph because of a shadow on the right side. Let it be assumed that this shadow area is A and a portion other than A within the frame is area B. A shadow portion of area A is reproduced to be bright by the following local printing processing.

1) First, the image is subjected to multiple resolution conversion.

The method of conversion has only to be a method that is known generally. In this case, however, a wavelet conversion, especially, Dyadic Wavelet conversion is used as a preferable example. Divided images ranging from a low level up to a high level are made in succession, and residues of low frequency images (1) are made.

Now, when the portion of area A is observed, the right side of the area (edge portion of the window frame) can be recognized from a divided image having a low level. However, the left side of the area (a contour of the shade formed in the room by an edge of the window frame) is not recognized from a divided image having a low level, but is recognized from a divided image having a high level. This means that the contour of the shade is not clear and is vague when compared with an edge of the window.

2) Next, masking processing is conducted on area A.

This is conducted in the course of bringing a divided image back to the original image through inverse conversion.

First, low frequency image (1) is added to mask image (1) (though an expression of "addition" is used here for convenience sake, it is "subtraction" in this drawing if black is defined to be 0 and white is defined to be a positive large value, and so forth), then, inverse conversion processing for composing this and divided images having a high level is conducted, thus, low frequency image (2) toward the lower level direction is obtained. By adding mask image (2) to the low frequency image (2), converted images are obtained through the same processing as in the foregoing.

The mask image (1) mentioned above is a mask to veil a left half of area A, while, the mask image (2) is a mask to veil a right half of area A. In the course of inverse conversion, the added mask image is blurred because it passes through a lowpass filter, however, mask image (1) is subjected to strong lowpass filter processing many times, thus, it acts as masking processing wherein an amount of masking processing in the vicinity of a boundary between area A and area B changes gently. Therefore, it is possible to conduct local printing processing that corresponds nicely to the contour of the shade that shows gentle changes.

For the same reason, mask image (2) works as a mask having a small amount of blurring, which makes it possible to conduct local printing processing which is suitable for an edge of the window frame.

With respect to the level of the inverse conversion at which the masking processing is conducted, the masking processing has only to be conducted in the case of inverse conversion at the resolution level at which the characteristics of the boundary between the areas appear most strongly. From characteristics of the image and results of the actual trials, however, masking processing may also be conducted at the level that is away by a prescribed amount from the resolution level at which the characteristics of the boundary between the areas appear most strongly, which makes it possible to conduct image processing tuning which is subjectively preferable.

Figs. 14 - 16 are examples of a mask form which can be used in the method stated above.

Fig. 14 is an example of the mask portion described above wherein a shade portion is divided into two small areas (1) and (2). Hereinafter, the parenthesized number which is greater in this case represents a mask which corresponds to the edge that is more clear. Even between small areas (1) and (2), there exists a boundary between areas shown with dotted lines.

In this case, a mask on the side of a smaller number that interposes an area may be in a split state clearly on the boundary between areas, but if a mask on the side of a greater number has change characteristics which are in conformity with characteristics of lowpass filter provided in the course of inverse conversion, until an amount of masking processing changes gently on the boundary between areas, or until a mask of a partner that touches the boundary is compounded with the aforesaid mask preferably, preferable effect is given to improvement of connection of a boundary between areas.

Fig. 15 is an example wherein masking processing with another resolution level is provided to separate patterns "cloud", "leaves of a tree, a treetop" and "person, a tree trunk", and (1) corresponds to rough edges such as cloud, (2) corresponds to slightly clear edges and (3) corresponds to clear edges.

Fig. 16 is a diagram of the state wherein sunbeams come substantially horizontally on a column whose upper edge is rounded from the upper portion obliquely from the right side schematically.

Incidentally, a method of making a mask image, namely, a method to establish an area for doing local printing selectively is a method described in TOKKAIHEI No. 11-284860, for example, and the area may be established by dividing brightness of a subject into several blocks with a histogram of image signal values so that the area may be established from the state of the division, or, it is also possible to establish the area by employing an extracting method for various types of areas or a subject pattern described in the present application. Evaluation of characteristics on the neighborhood of a boundary of the areas thus established and actual mask addition processing are conducted as stated above.

Those explained above include a method to determine the total correction level and a partial masking (local printing) method, and these methods may either be used in combination or be used by switching depending on a scene.

Though gradation and brightness have been exemplified in the above explanation, the invention may also be applied to establishment of various conditions such as color reproduction and chroma reproduction.

For example, with respect to (1) and (2) shown in Fig. 11, there are considered differences of preferable processing states mentioned below, and these may be subjected to the aforesaid average processing, separate and individual processing for a divided area and further to processing for combination of the aforesaid two processing.

a. (Item)
b. (preferable processing for (1))
c. (preferable processing for (2))
d. Hue reproduction
e. Reproduction closer to color in memory
f. Reproduction closer to an actual object
g. Chroma reproduction
h. Natural reproduction
i. Intensifying color enhancement

Further, even for establishment of processing conditions such as sharpness and graininess, it is possible to conduct image processing for the entire image area based on a weighting average corresponding to information of priority order of plural subject patters and thereby to obtain the image processing results which meet the customer desire, and it is further possible to conduct separate and individual processing for a divided area and processing of combination of the aforesaid separate and individual processing.

Even for sharpness and graininess, there are considered differences of preferable processing states mentioned below, with respect to (1) and (2) shown in Fig. 11.

j. (Item)
k. (preferable processing for (1))
l. (preferable processing for (2))
m. Sharpness
n. Soft resolution
o. Lower frequency than (1), emphasizing of contrast
p. Graininess
q. Emphasizing details and focusing feeling, even if residue existing

Fig. 17 relates to sharpness (emphasizing processing in this case) and graininess (granular structure eliminating processing in this case), and shows an example of area division.

In this case, it is assumed that an area is divided into three portions including "C: cloud", "B: blue sky" and "A: mountain, trees".

As is shown in Fig. 17 (b), A, B and C each being a preferable combination of sharpness and graininess are different each other. With respect to relationship between boundary areas, the relationship between A and B is a clear contour, while, the relationship between B and C is a blurred contour.

It is clear that the characteristic of the area boundary can be judged easily by evaluating the relationship of image signal values at each resolution level generated through multiple resolution conversion processing explained in the example of processing in the Fig. 13.

After that, in the example of sharpness processing, for example, there is prepared a mask (representing one that is the same as the mask in the example shown in Fig. 13) wherein the sharpness emphasizing coefficients each having therein a degree of sharpness emphasizing indicated by the numerical value are arranged to correspond the positions of the image areas, then, resolution levels each conforming to each of areas A - C are obtained by the method explained in Fig. 13, and obtains a correction mask that is blurred by a blurring amount corresponding to the conforming resolution level, to compound correction masks in total three sheets for areas A - C.

If an amount of correction for a pixel located at the position corresponding to the mask is determined in accordance with information of a correction amount described on the compounded mask, it is possible to obtain the most preferable state wherein sharpness emphasizing corresponding to characteristics of areas A - C is provided, a correction amount of sharpness emphasizing is changed clearly on the boundary between A and B areas, and a correction amount of sharpness emphasizing is changed gently on the boundary between B and C areas.

Further, in the case of image information having a plurality of color dimensions such as a color image, for example, color specification conversion is conducted in case of need, and the processing which has been explained thus far may be conducted only for the necessary axis of coordinates.

For example, with respect to brightness correction which is especially important for gradation correction in a way of local printing, in the case of an image expressed by three colors of RGB, conversion to luminance and color difference (Lab or the like) is conducted once, and processing is conducted only for luminance information, thus, a decline of image processing quality can be controlled and an amount of image processing can be controlled greatly.

When each of an area to be divided in an area such as a flower, the sea and the sky and a subject has its peculiar color tone, one or both of processing to determine an area boundary and processing to evaluate characteristics of the area boundary are conducted with a color coordinate that can extract the peculiar color tone in an easiest way, and image processing for the actual area can also be conducted for a color coordinate that is different from the aforementioned color coordinate, for example, for the coordinate of luminance or chroma, and it is also possible to conduct performance tuning which is specialized for a specific and special image such as "a flower of a certain kind (for example, a deep-red rose".

The image processing method of the invention, an image processing apparatus and a process to carry out the program are shown in a flow chart as follows.

Fig. 18 is an example showing the most basic processes.

First, inputted image information is acquired (step 1), then, a film or a medium is inspected whether it has therein scene attribute or related information (step 2), and when the information is present in the film or the medium (YES in step 2), the acquired information is stored in an information storage section (step 3). On the other hand, an image is displayed on an image display section, and information about scene attribute is acquired also from a customer to be stored in the image storage section (step 4).

Based on the information mentioned above, scene attribute is determined (step 5), and a subject pattern to be extracted is determined (step 6).

Next, the determined subject pattern is extracted (step 7) in a method using, for example, a multiple resolution conversion processing, then information of the priority order is given by using a weighting coefficient (step 8), and further, the priority order is corrected in accordance with a position and a size of the extracted subject pattern (step 9).

Further, an amount of correction corresponding to the extracted subject pattern is determined (step 10) based on various types of information stored in the image storage section, for example, information about preferable gradation, color tone reproduction, or desirable sharpness and graininess, then, a weighting average value of an amount of correction of gradation of the subject pattern obtained in step 10 is calculated (step 11) by using a weighting coefficient of the subject pattern obtained in step 9, and correction in quantity corresponding to the weighting average value is conducted on the image (step 12) to terminate the processing.

Fig. 19 shows another preferable example wherein the invention is applied on gradation correction, and local printing processing is further used.

Though the process to acquire inputted image information (step 1) and to determine an amount of correction corresponding to the extracted subject pattern based on various pieces of information stored in the information storage section, for example, information about preferable gradation and color tone reproduction, or about desirable sharpness and graininess (step 10), is the same as that in Fig. 18, the amount of correction to be obtained is an amount of correction of gradation, because an object is limited to gradation correction in this case.

Next, the amount of correction of each subject pattern is divided into a component for local printing processing and the rest (step 101), then, masking processing is conducted by using the local printing method described in the present application in which a multiple resolution conversion processing is applied (step 102), then, a weighting average value of the component of the rest of the amount of correction of gradation of the subject pattern obtained in step 101 is calculated (step 103) by using a weighting coefficient of the subject pattern obtained in step 9, and correction of gradation in quantity corresponding to the weighting average value is conducted (step 104) to terminate the processing.

Fig. 20 shows still another example of the process to determine scene attribute.

First, inputted image information is acquired (step 1), then, a film or a medium is inspected whether it has therein scene attribute or related information (step 2), and when the information is present in the film or the medium (YES in step 2), the acquired information is stored in an information storage section (step 3). On the other hand, an image is displayed on an image display section, and information about scene attribute is acquired also from a customer to be stored in the image storage section (step 4). The process up to this point is the same as that explained above.

In the case of no information (No) in step 2, a plurality of assumable subject patterns are established first (step 201), and extraction processing is conducted for these subject patters based on a series of inputted image information (step 202).

Next, a candidate scene attribute is estimated from the state of extraction of subject patterns (step 203), then, customer information is acquired further (step 204), and candidates are narrowed (step 205) by referring to a trend of scene attribute for processed images which were ordered by a customer in the past and are stored in the information storage section, to determine scene attribute (step 5).

Further, the state of extraction of these subject patters and the state of establishment of scene attribute are accumulated and stored in the information storage section together with customer information (step 206) to terminate the flow of scene attribute establishment.

Fig. 21 is an example showing the actual process in the case of registering new subject patterns.

First, inputted image information is acquired (step 1), and the acquired image is displayed on a monitor (step 302). In this case, an operator designates a position where the subject pattern to be registered exists, and receives its position information (step 303).

Next, a related area for the image is cut out by using the position information received serving as an origin, and processing to extract is conducted to display the extracted area on a monitor (step 304).

An operator observes the image displayed on the monitor to judge whether the extraction for all subject patters is completed or not, and depresses an indication key. When information of the depressed key thus obtained shows that completion of extraction is not indicated (No in step 304), processing is repeated from step 303, while, when the completion of extraction is indicated (YES in step 304), the flow moves to the succeeding processing.

Since the extraction processing is completed in this case, a name of the extracted area, namely, of the new subject pattern is obtained from an inputting means (step 306), and further, related various types of information, such as, for example, constituent elements of the subject pattern and their state of connection, priority order, preferable gradation and information about color reproduction, are linked with the name of the subject pattern (step 307), and these information groups are stored in the information storage section (step 308) to terminate subject pattern registration work.

The invention makes it possible to conduct image processing that pays attention to a specific subject, in accordance with a purpose of photographing and with an estimated primary subject, because a subject existing in an image is distinguished and the image is divided into plural portions.

## Claims

**1.** An image processing method, comprising steps of:

obtaining input image information including input image data from an input device;
discriminating plural subjects existing in the input image data;
dividing the input image data into plural subject patterns corresponding to the discriminated plural subjects;
obtaining a relationship among the plural subject patterns;
determining a processing method for the input image data of the plural subject patterns on a basis of the relationship, and
processing the input image data of the plural subject patterns in accordance with the processing method so as to obtain output image data.

**2.** The method of claim 1, wherein as the processing method, a respective processing method is determined for each subject pattern based on respective relevant information regarding each subject pattern.

3. The method of claim 2, wherein the respective relevant information regarding each subject pattern includes priority order information set for each subject.

4. The method of claim 3, wherein the priority order information is set in accordance with a kind of each subject.

5. The method of claim 3, wherein the priority order information includes a weighting value set in accordance with a degree of importance of each subject.

6. The method of claim 1, wherein the dividing step is conducted by a pattern extracting process to extract the plural subject patterns from the input image data and the respective relevant information includes pattern information regarding each extracted subject pattern.

7. The method of claim 3, wherein the pattern information includes sub-priority order information set for each subject pattern in accordance with existence situation how each subject pattern exists in an image area of the input image data and the priority order information is corrected by the sub-priority order information.

8. The method of claim 7, wherein the sub-priority order information is set in accordance with at least one of an occupation ratio of each subject pattern to the image area and a location of each subject pattern on the image area.

9. The method of claim 1, wherein the plural subjects existing in the input image data are discriminated in accordance with scene attribution of the input image data.

10. The method of claim 1, wherein the input image information includes the scene attribution as additional information.

11. The method of claim 1, wherein the input device inputs the scene attribution of the input image data.

12. The method of claim 3, wherein the priority order information is set in accordance with the scene attribution of the input image data.

13. The method of claim 1, wherein when each subject patter comprises plural unit patterns, the pattern extracting process extracts the plural unit patters and detects the existence situation of each subject pattern from connecting conditions among the plural unit patterns.

14. The method of claim 13, wherein the pattern extracting process is conducted by the input device in such a way that the location of each of the plural unit patterns is inputted on a screen on which the input image data is indicated, and wherein the pattern extracting process obtains connecting relation information among all of the extracted plural unit patterns, determines the subject pattern information from the connecting relation information and extracts the plural subject patterns from the input image data on a basis of the subject pattern information.

15. The method of claim 14, wherein the obtaining step selects a set of input image data from plural sets of input image data, the pattern extracting process obtains the subject pattern information including the connecting relation information from the selected set of input image data and the processing step conducts the image processing for the other sets of input image data by applying the subject pattern information to the other sets of input image data.

16. The method of claim 13, wherein the pattern extracting process extracts the plural subject pattern in relation to customer information.

17. An image processing apparatus, comprising:

a first obtaining section for obtaining input image information including input image data from an input device;
a discriminating section for discriminating plural subjects existing in the input image data;
a dividing for dividing the input image data into plural subject patterns corresponding to the discriminated plural subjects;
a second obtaining section for obtaining a relationship among the plural subject patterns;
a determining section for determining a processing method for the input image data of the plural subject patterns on a basis of the relationship, and
a processing section for processing the input image data of the plural subject patterns in accordance with the processing method so as to obtain output image data.

**18.** A computer program for conducting an image processing method, comprising steps of:

obtaining input image information including input image data from an input device;
discriminating plural subjects existing in the input image data;
dividing the input image data into plural subject patterns corresponding to the discriminated plural subjects;
obtaining a relationship among the plural subject patterns;
determining a processing method for the input image data of the plural subject patterns on a basis of the relationship, and
processing the input image data of the plural subject patterns in accordance with the processing method so as to obtain output image data.

FIG. 1

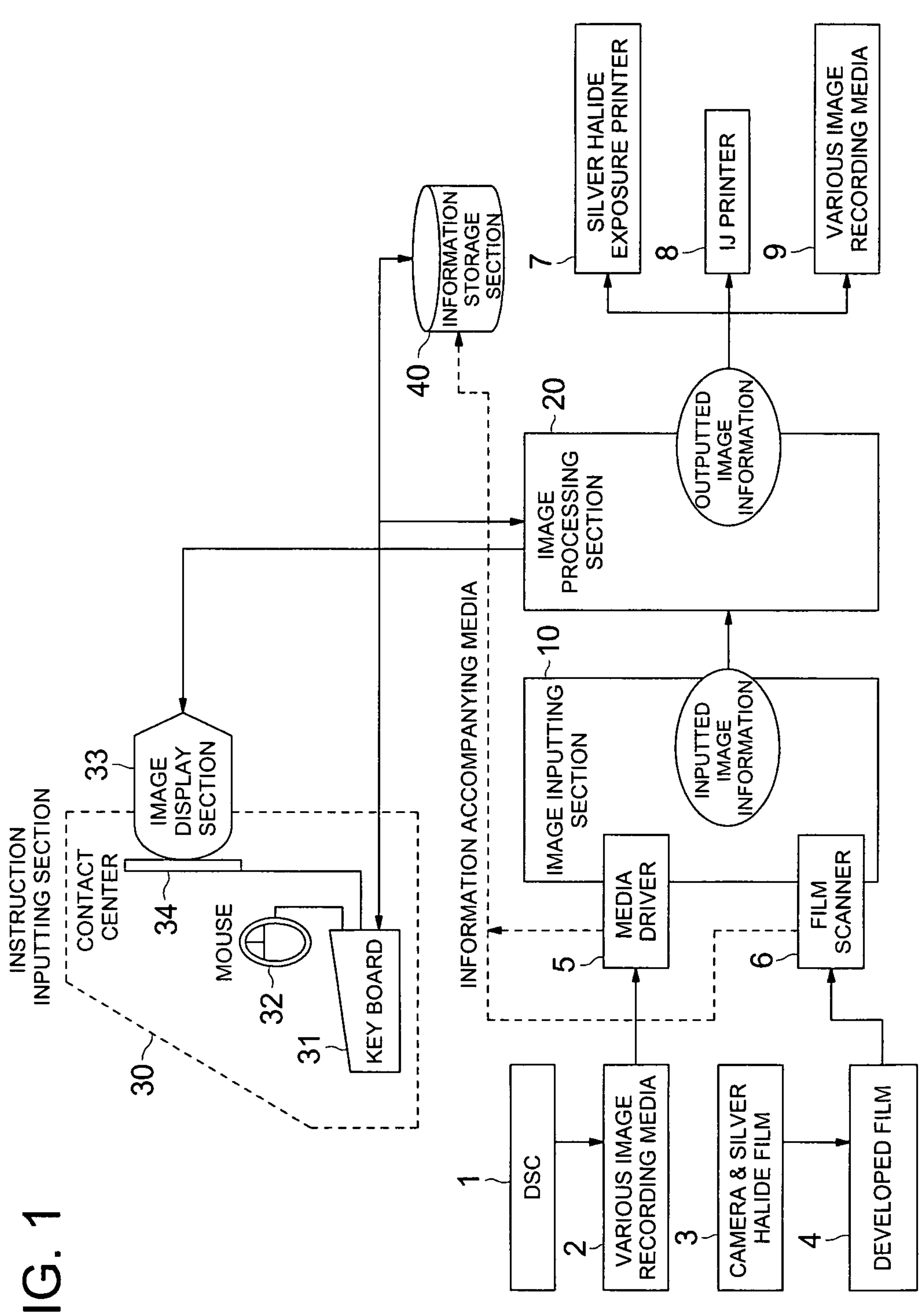
INSTRUCTION INPUTTING SECTION
30
CONTACT CENTER
34
MOUSE
32
31
KEY BOARD
33
IMAGE DISPLAY SECTION
40
INFORMATION STORAGE SECTION
INFORMATION ACCOMPANYING MEDIA
1
DSC
2
VARIOUS IMAGE RECORDING MEDIA
3
CAMERA & SILVER HALIDE FILM
4
DEVELOPED FILM
5
MEDIA DRIVER
6
FILM SCANNER
10
IMAGE INPUTTING SECTION
INPUTTED IMAGE INFORMATION
20
IMAGE PROCESSING SECTION
OUTPUTTED IMAGE INFORMATION
7
SILVER HALIDE EXPOSURE PRINTER
8
IJ PRINTER
9
VARIOUS IMAGE RECORDING MEDIA

FIG. 2

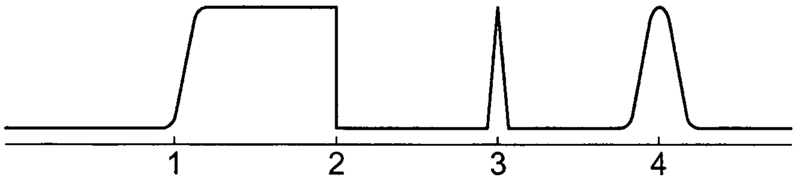


FIG. 3

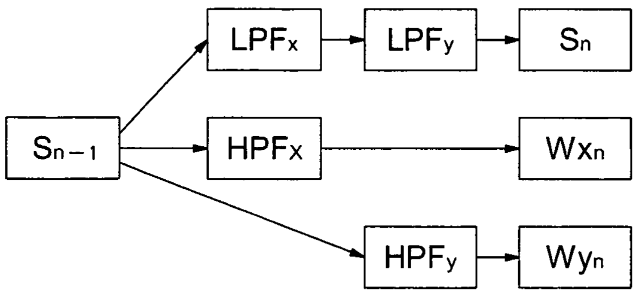


FIG. 4

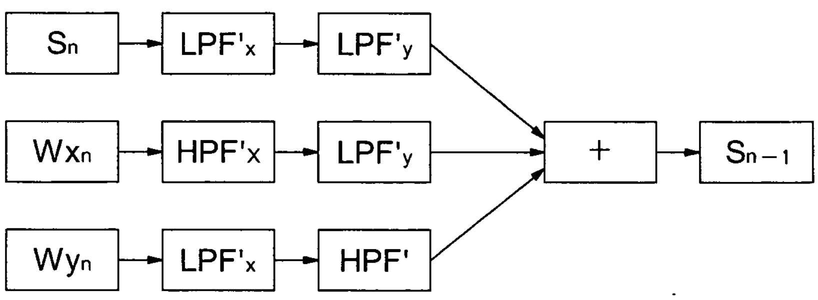


FIG. 5

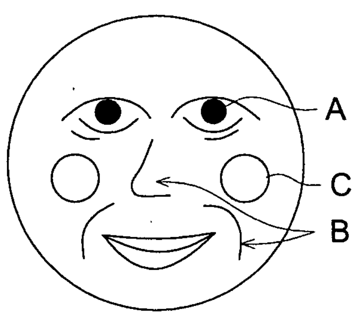

FIG. 6

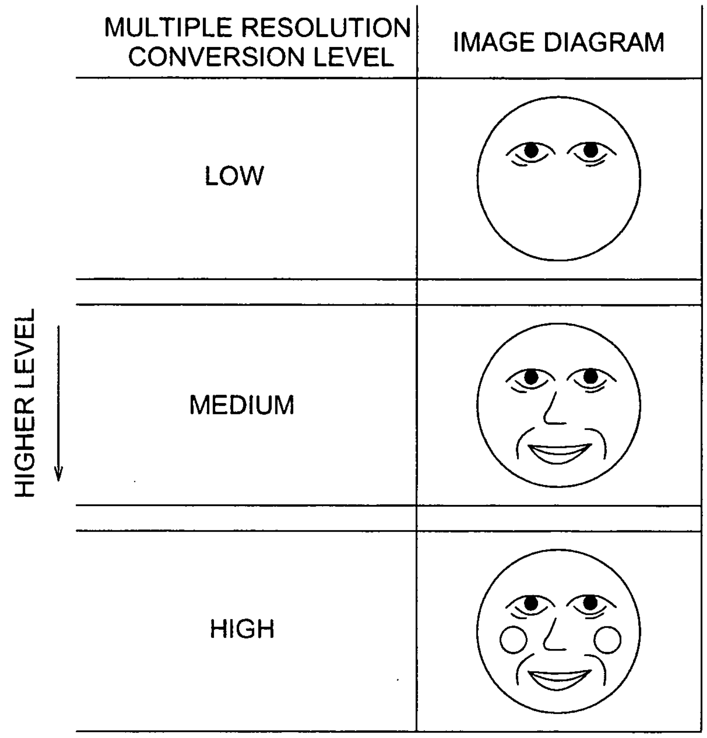
MULTIPLE RESOLUTION CONVERSION LEVEL
IMAGE DIAGRAM
LOW
MEDIUM
HIGH
HIGHER LEVEL

FIG. 7

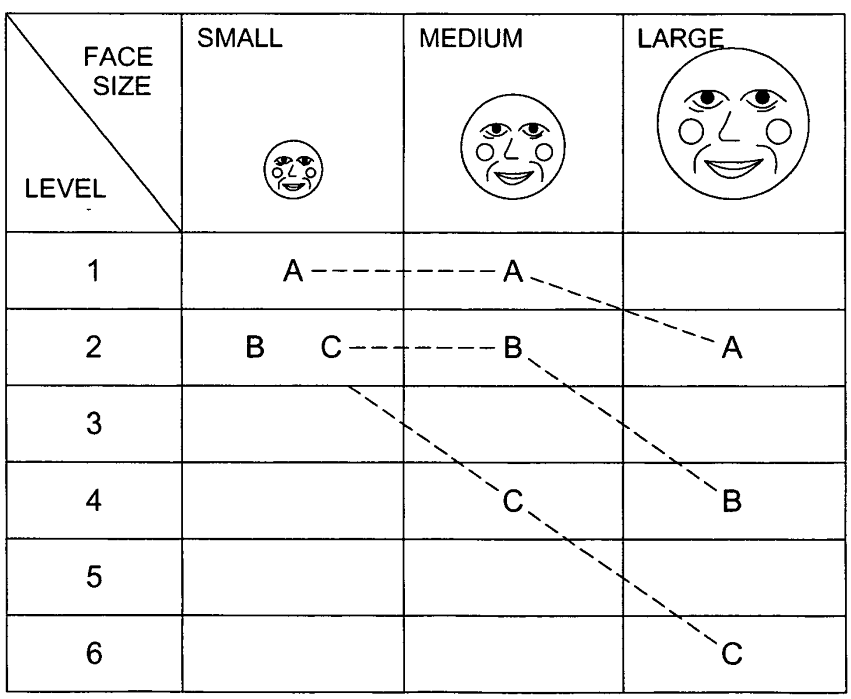
FACE SIZE
LEVEL
SMALL
MEDIUM
LARGE
1
2
3
4
5
6
A
A
A
B
C
B
C
B
C

FIG. 8 ( a )

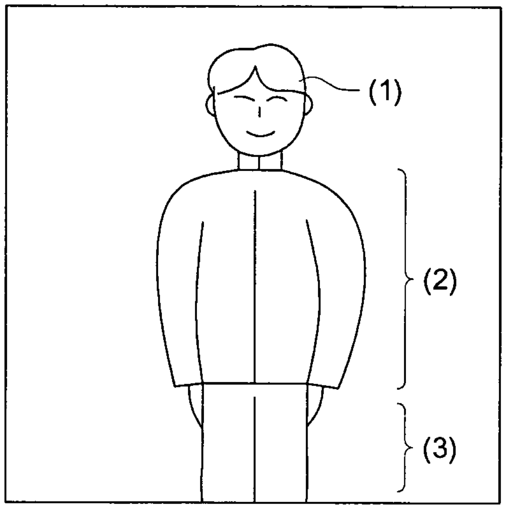


FIG. 8 ( b )

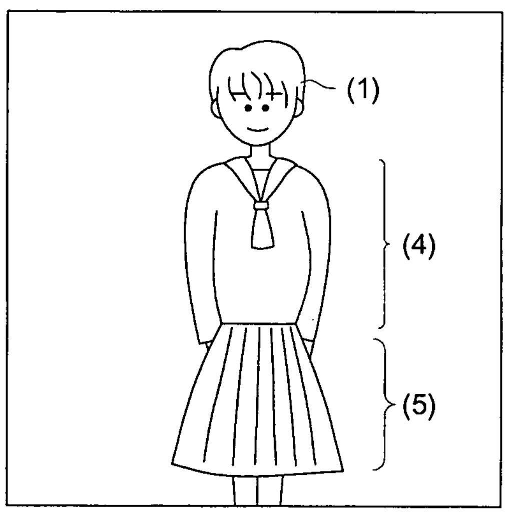

FIG. 9 ( a )

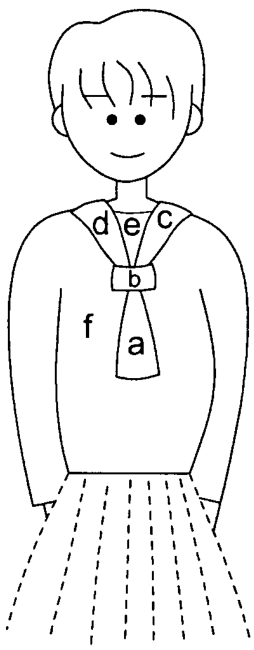


FIG. 9 ( b )

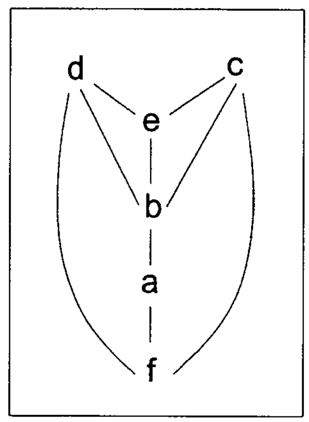

FIG. 10

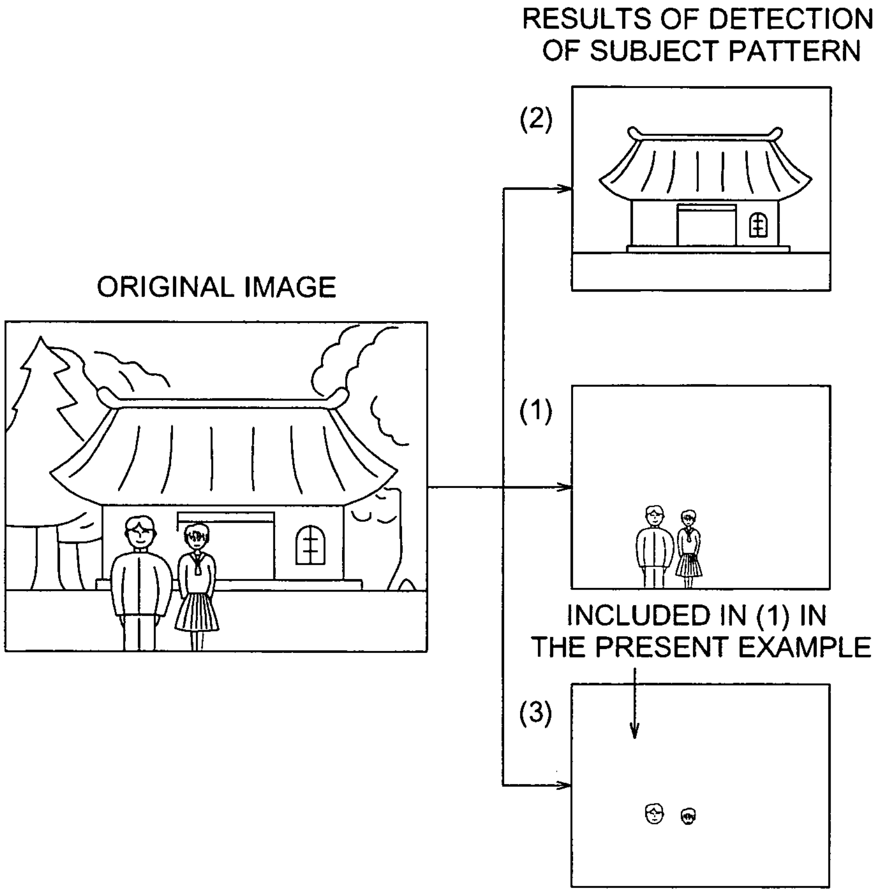
RESULTS OF DETECTION
OF SUBJECT PATTERN
(2)
ORIGINAL IMAGE
(1)
INCLUDED IN (1) IN
THE PRESENT EXAMPLE
(3)

FIG. 11 (a)

ORIGINAL IMAGE

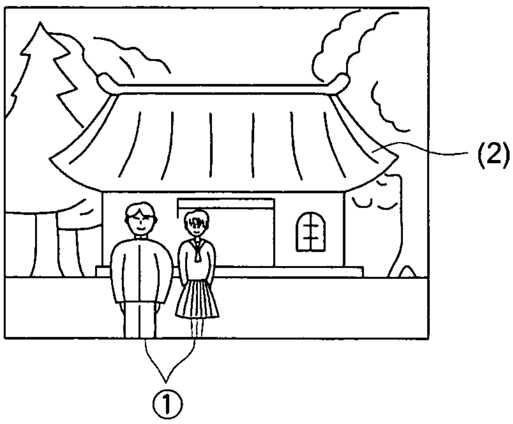


FIG. 11 (b)

HISTOGRAM OF ORIGINAL IMAGE

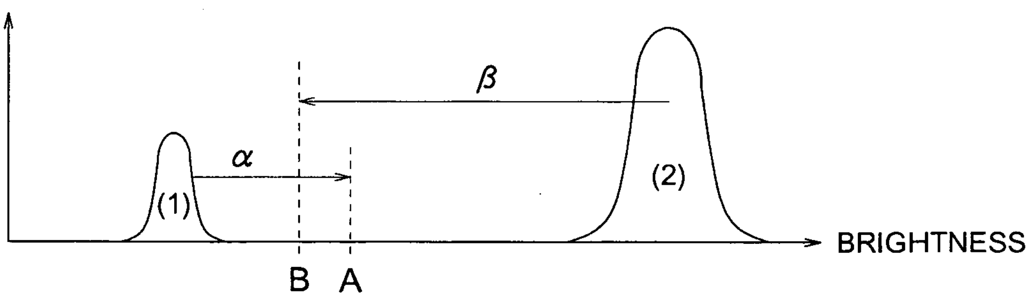


A : BRIGHTNESS PREFERABLE FOR REPRODUCING (1)

B : BRIGHTNESS PREFERABLE FOR REPRODUCING (2)

FIG. 12 (a)

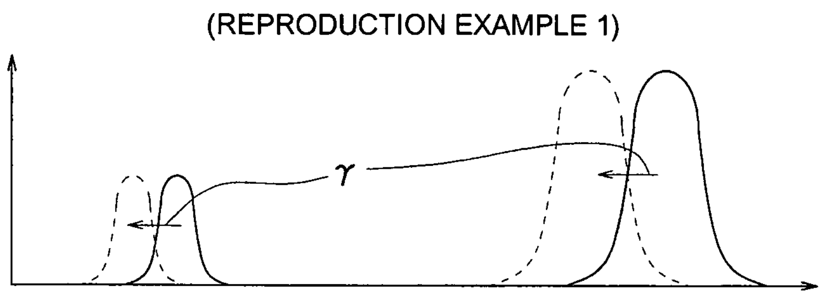


FIG. 12 (b)

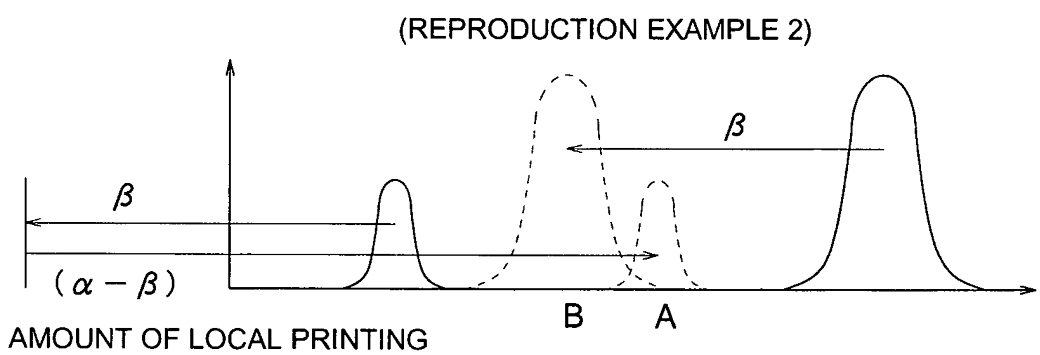


FIG. 12 (c)

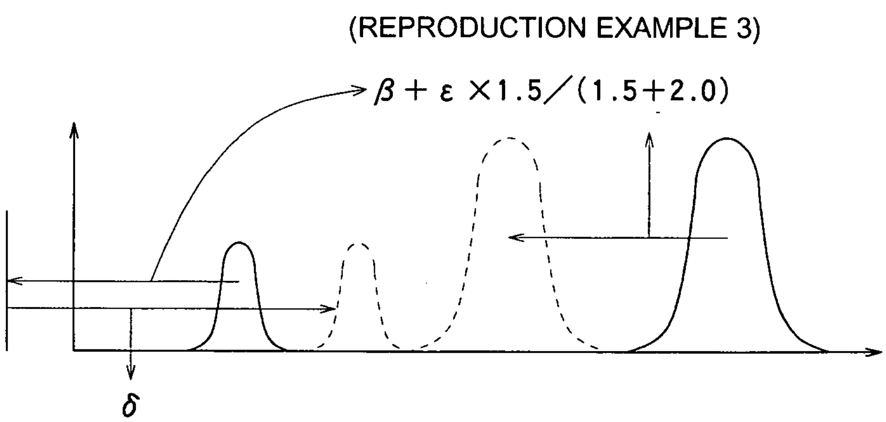

FIG. 13

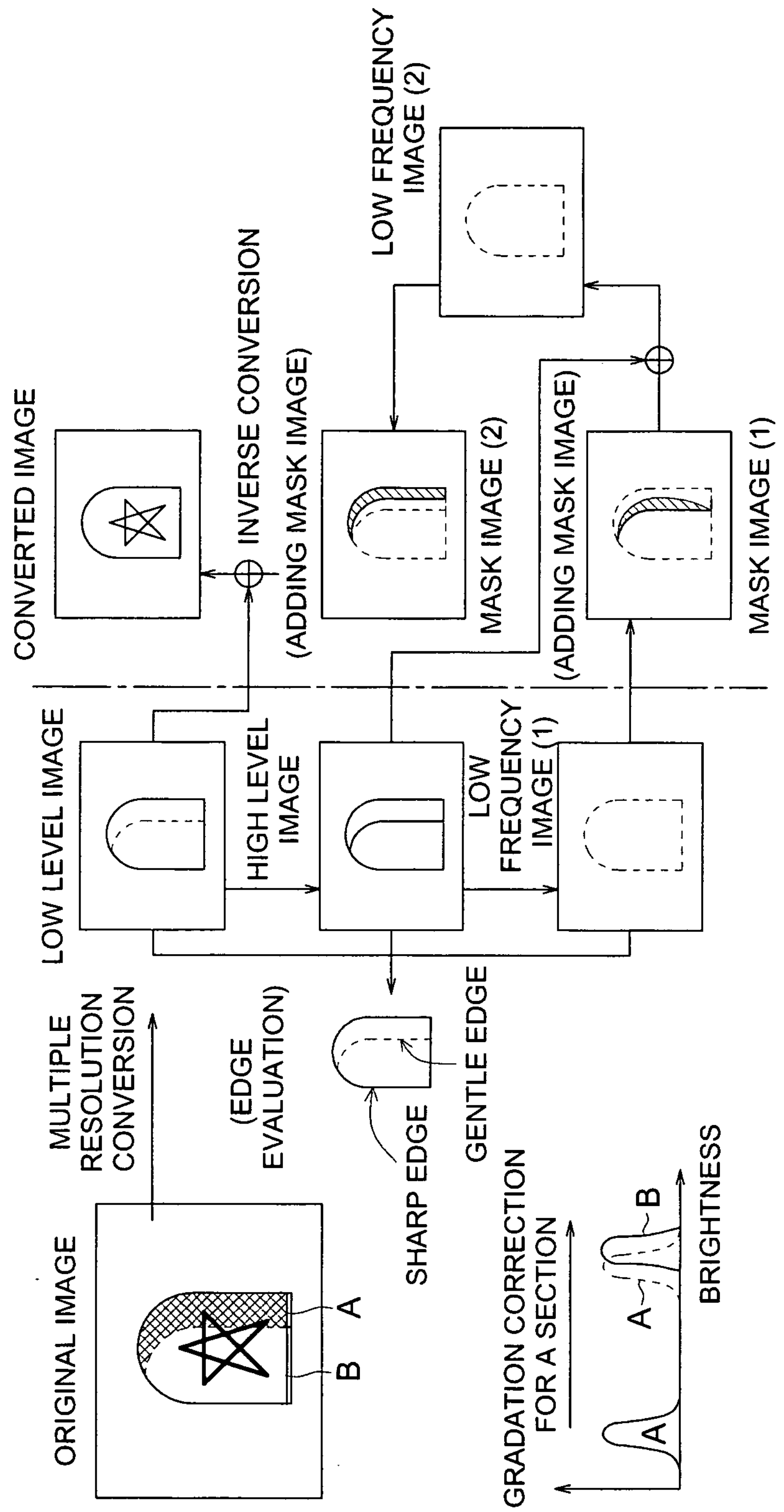
ORIGINAL IMAGE
A
B
MULTIPLE RESOLUTION CONVERSION
(EDGE EVALUATION)
SHARP EDGE
GENTLE EDGE
GRADATION CORRECTION FOR A SECTION
A
A
B
BRIGHTNESS
LOW LEVEL IMAGE
HIGH LEVEL IMAGE
LOW FREQUENCY IMAGE (1)
CONVERTED IMAGE
INVERSE CONVERSION (ADDING MASK IMAGE)
MASK IMAGE (2)
(ADDING MASK IMAGE)
MASK IMAGE (1)
LOW FREQUENCY IMAGE (2)

FIG. 14

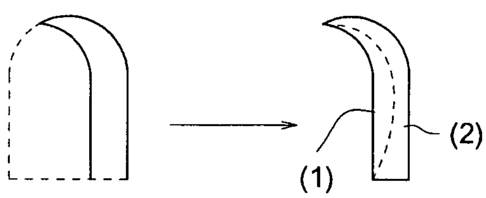


FIG. 15

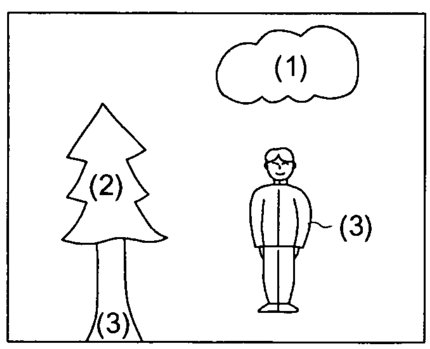

# FIG. 16

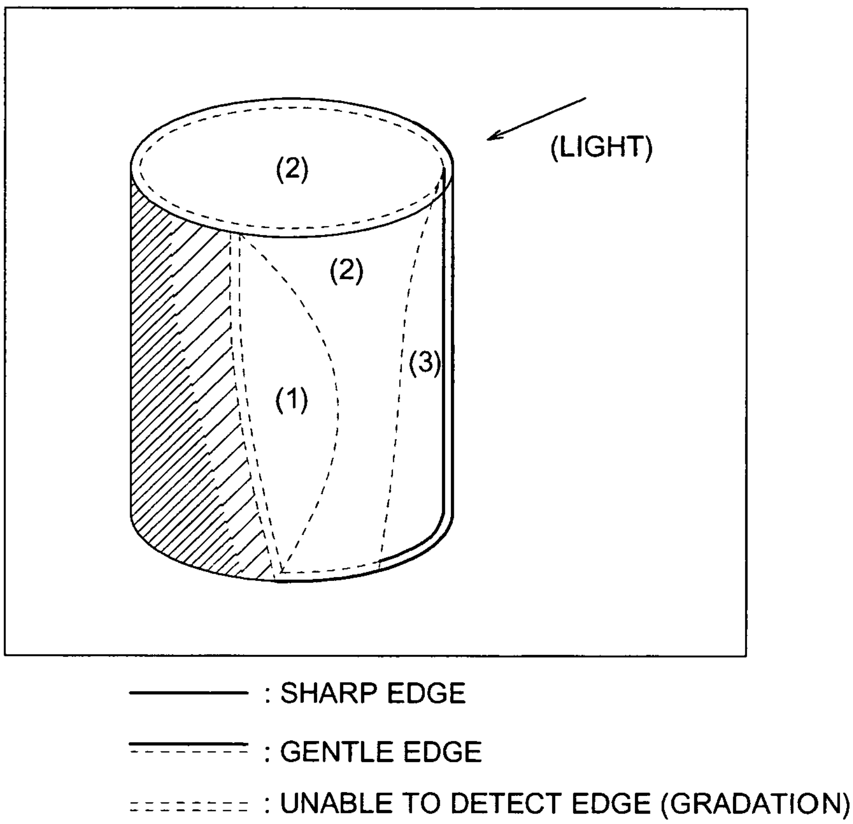
(LIGHT)
(2)
(2)
(1)
(3)
: SHARP EDGE
: GENTLE EDGE
: UNABLE TO DETECT EDGE (GRADATION)

# FIG. 17 (a)

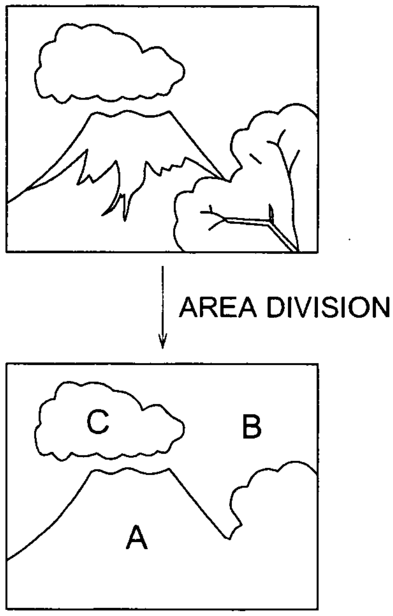


A : MOUNTAIN, TREES
B : BLUE SKY
C : CLOUDS

# FIG. 17 (b)

| | PREFERABLE EXAMPLES | | NATURE OF BOUNDARY OF AREAS |
|---|---|---|---|
| | SHARPNESS ENHANCING PROCESSING | GRANULARITY REMOVING PROCESSING | |
| A | STRONG | WEAK | SHARP |
| B | WEAK | STRONG | BLURRED |
| C | MEDIUM | MEDIUM | |

FIG. 18

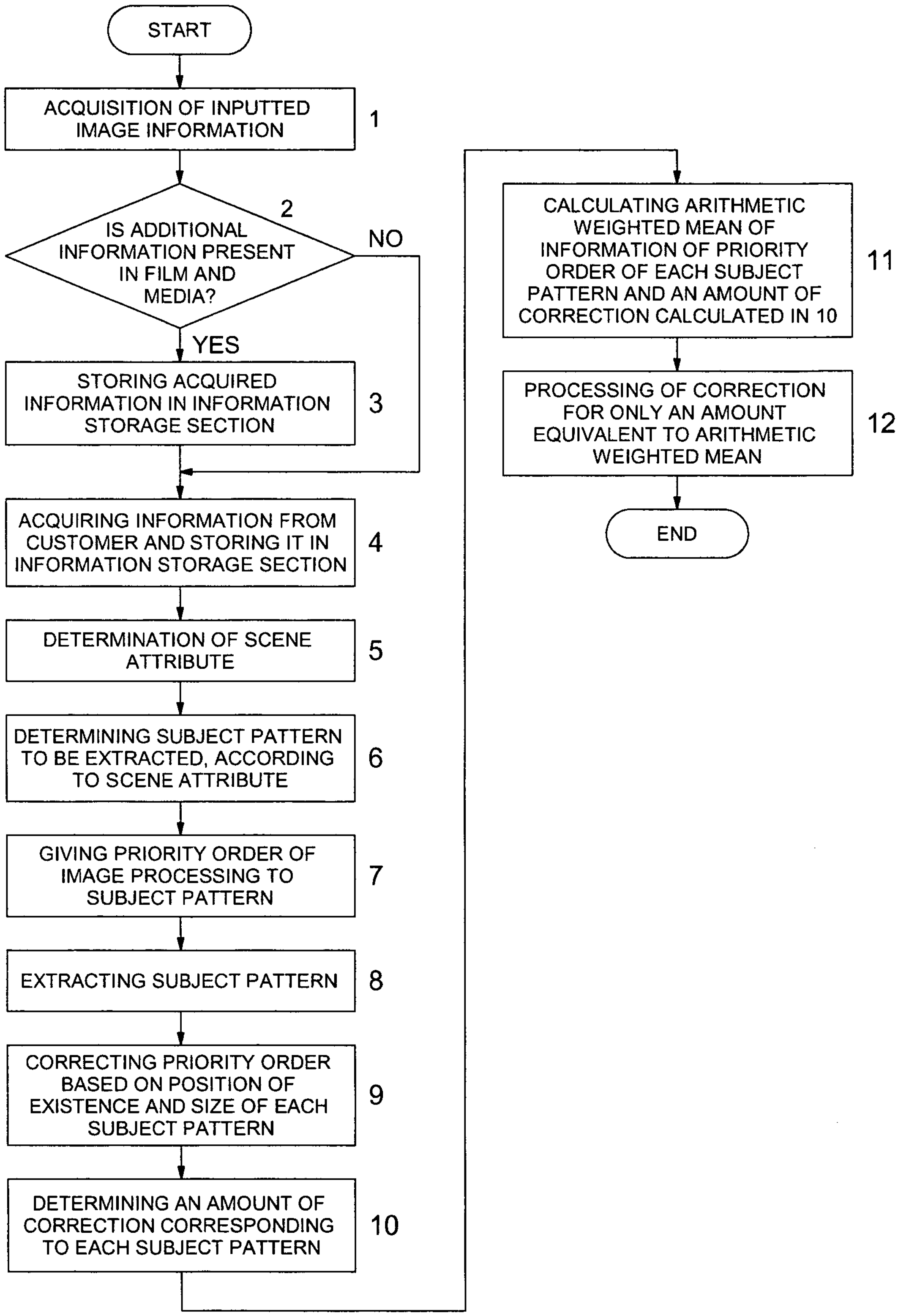
START
ACQUISITION OF INPUTTED IMAGE INFORMATION
1
IS ADDITIONAL INFORMATION PRESENT IN FILM AND MEDIA?
2
NO
YES
STORING ACQUIRED INFORMATION IN INFORMATION STORAGE SECTION
3
ACQUIRING INFORMATION FROM CUSTOMER AND STORING IT IN INFORMATION STORAGE SECTION
4
DETERMINATION OF SCENE ATTRIBUTE
5
DETERMINING SUBJECT PATTERN TO BE EXTRACTED, ACCORDING TO SCENE ATTRIBUTE
6
GIVING PRIORITY ORDER OF IMAGE PROCESSING TO SUBJECT PATTERN
7
EXTRACTING SUBJECT PATTERN
8
CORRECTING PRIORITY ORDER BASED ON POSITION OF EXISTENCE AND SIZE OF EACH SUBJECT PATTERN
9
DETERMINING AN AMOUNT OF CORRECTION CORRESPONDING TO EACH SUBJECT PATTERN
10
CALCULATING ARITHMETIC WEIGHTED MEAN OF INFORMATION OF PRIORITY ORDER OF EACH SUBJECT PATTERN AND AN AMOUNT OF CORRECTION CALCULATED IN 10
11
PROCESSING OF CORRECTION FOR ONLY AN AMOUNT EQUIVALENT TO ARITHMETIC WEIGHTED MEAN
12
END

FIG. 19

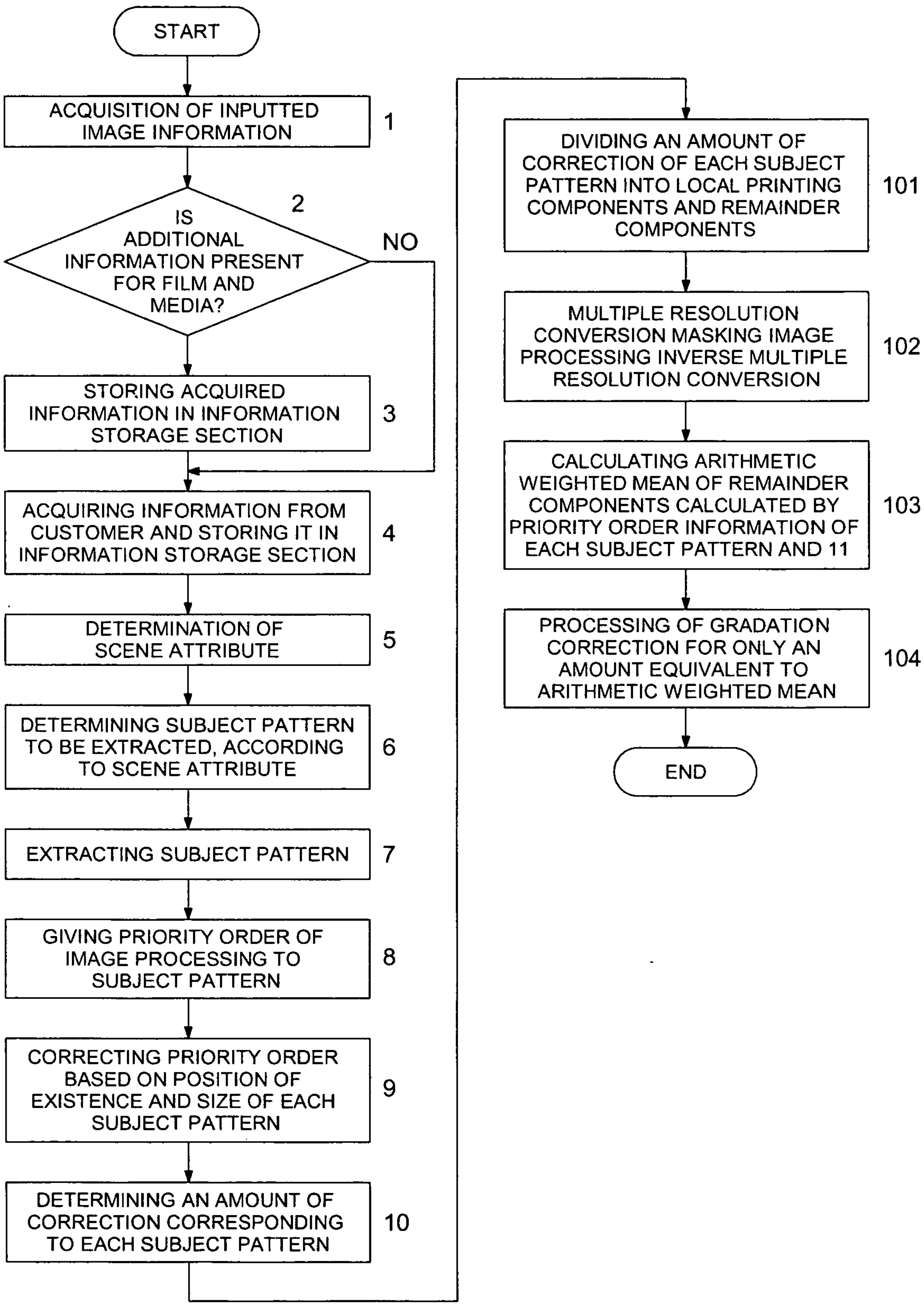
START
ACQUISITION OF INPUTTED IMAGE INFORMATION
1
IS ADDITIONAL INFORMATION PRESENT FOR FILM AND MEDIA?
2
NO
STORING ACQUIRED INFORMATION IN INFORMATION STORAGE SECTION
3
ACQUIRING INFORMATION FROM CUSTOMER AND STORING IT IN INFORMATION STORAGE SECTION
4
DETERMINATION OF SCENE ATTRIBUTE
5
DETERMINING SUBJECT PATTERN TO BE EXTRACTED, ACCORDING TO SCENE ATTRIBUTE
6
EXTRACTING SUBJECT PATTERN
7
GIVING PRIORITY ORDER OF IMAGE PROCESSING TO SUBJECT PATTERN
8
CORRECTING PRIORITY ORDER BASED ON POSITION OF EXISTENCE AND SIZE OF EACH SUBJECT PATTERN
9
DETERMINING AN AMOUNT OF CORRECTION CORRESPONDING TO EACH SUBJECT PATTERN
10
DIVIDING AN AMOUNT OF CORRECTION OF EACH SUBJECT PATTERN INTO LOCAL PRINTING COMPONENTS AND REMAINDER COMPONENTS
101
MULTIPLE RESOLUTION CONVERSION MASKING IMAGE PROCESSING INVERSE MULTIPLE RESOLUTION CONVERSION
102
CALCULATING ARITHMETIC WEIGHTED MEAN OF REMAINDER COMPONENTS CALCULATED BY PRIORITY ORDER INFORMATION OF EACH SUBJECT PATTERN AND 11
103
PROCESSING OF GRADATION CORRECTION FOR ONLY AN AMOUNT EQUIVALENT TO ARITHMETIC WEIGHTED MEAN
104
END

FIG. 20

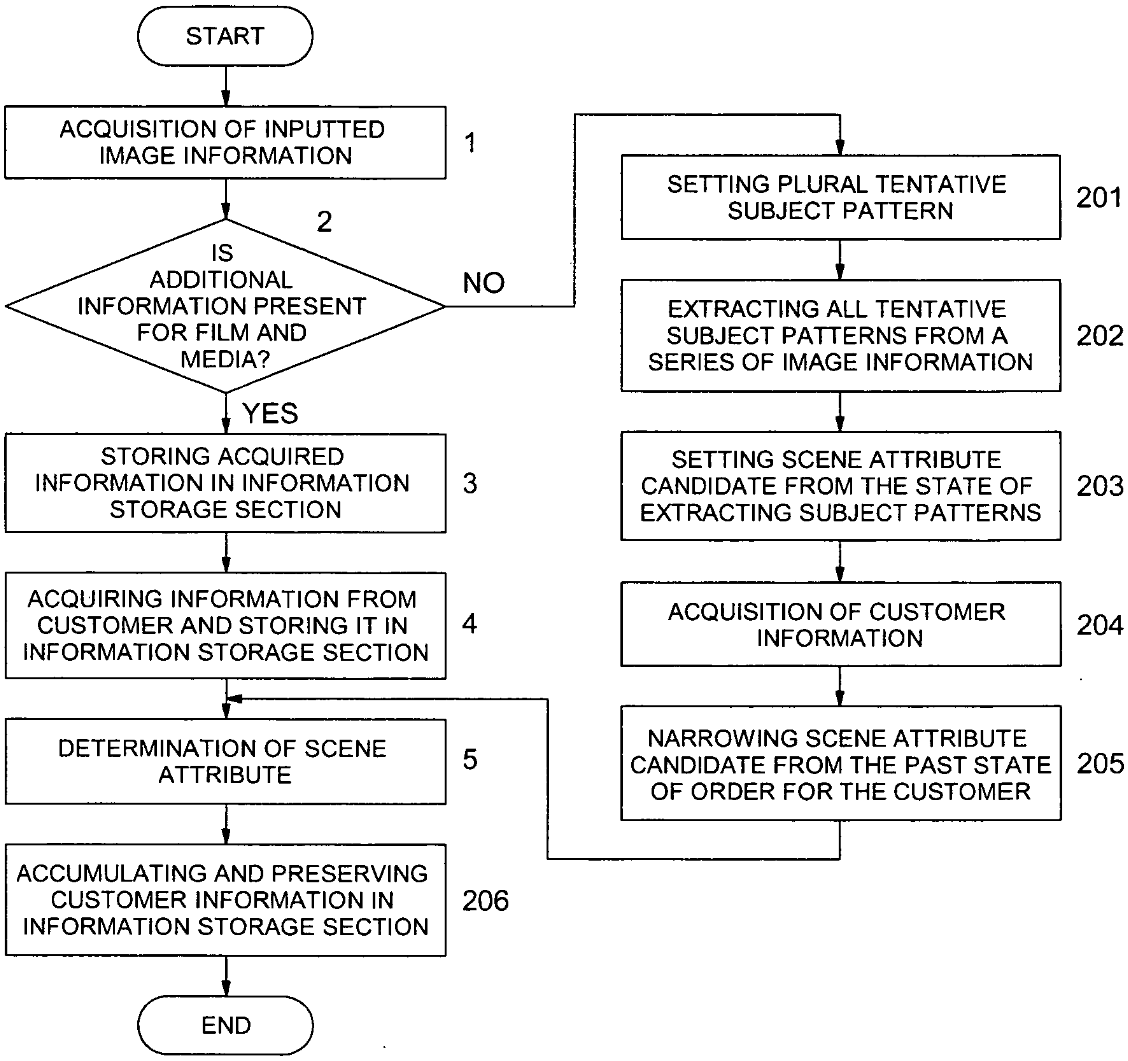
START
ACQUISITION OF INPUTTED IMAGE INFORMATION
1
2
IS ADDITIONAL INFORMATION PRESENT FOR FILM AND MEDIA?
NO
YES
STORING ACQUIRED INFORMATION IN INFORMATION STORAGE SECTION
3
ACQUIRING INFORMATION FROM CUSTOMER AND STORING IT IN INFORMATION STORAGE SECTION
4
DETERMINATION OF SCENE ATTRIBUTE
5
ACCUMULATING AND PRESERVING CUSTOMER INFORMATION IN INFORMATION STORAGE SECTION
206
END
SETTING PLURAL TENTATIVE SUBJECT PATTERN
201
EXTRACTING ALL TENTATIVE SUBJECT PATTERNS FROM A SERIES OF IMAGE INFORMATION
202
SETTING SCENE ATTRIBUTE CANDIDATE FROM THE STATE OF EXTRACTING SUBJECT PATTERNS
203
ACQUISITION OF CUSTOMER INFORMATION
204
NARROWING SCENE ATTRIBUTE CANDIDATE FROM THE PAST STATE OF ORDER FOR THE CUSTOMER
205

FIG. 21

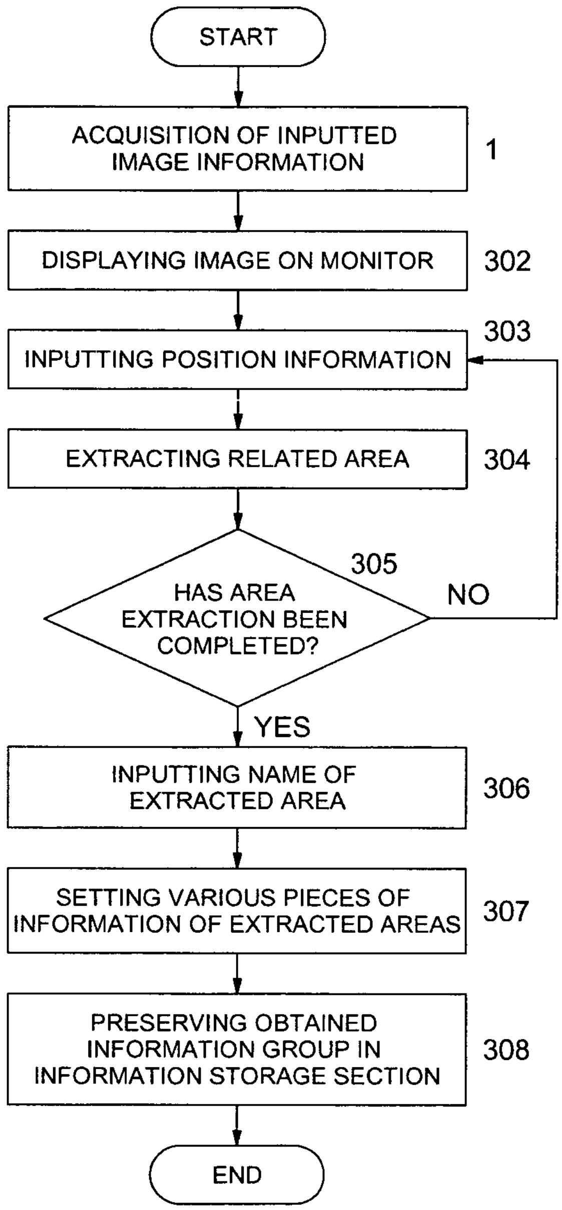
START
ACQUISITION OF INPUTTED IMAGE INFORMATION
1
DISPLAYING IMAGE ON MONITOR
302
303
INPUTTING POSITION INFORMATION
EXTRACTING RELATED AREA
304
305
HAS AREA EXTRACTION BEEN COMPLETED?
NO
YES
INPUTTING NAME OF EXTRACTED AREA
306
SETTING VARIOUS PIECES OF INFORMATION OF EXTRACTED AREAS
307
PRESERVING OBTAINED INFORMATION GROUP IN INFORMATION STORAGE SECTION
308
END